# EUROPEAN PATENT SPECIFICATION

(11) **EP 3 139 664 B1**
(45) Date of publication and mention of the grant of the patent: **06.06.2018**
(21) Application number: 14890785.0
(22) Date of filing: 30.04.2014
(51) Int. Cl.: H04W 36/00, H04W 48/20, H04B 7/024, H04B 7/06

(54) **CELL ACCESS METHODS, BASE STATIONS AND USER EQUIPMENT**
ZELLENZUGANGSVERFAHREN, BASISSTATIONEN UND BENUTZERGERÄT
PROCÉDÉS DE COMMUNICATION DE JONCTION, STATIONS DE BASE ET ÉQUIPEMENT D'UTILISATEUR

(43) Date of publication of application: 08.03.2017
(73) Proprietor: Huawei Technologies Co. Ltd., Shenzhen, Guangdong 518129 (CN)
(72) Inventor: LI, You, Shenzhen Guangdong 518129 (CN); QIU, Jing, Shenzhen Guangdong 518129 (CN); TANG, Xiaoyong, Shenzhen Guangdong 518129 (CN)
(74) Representative: Gill Jennings & Every LLP
(86) International application number: PCT/CN2014/076658
(87) International publication number: WO 2015/165100

(56) References cited:
- WO-A1-2013/049505
- WO-A1-2013/137871
- CN-A- 102 204 359
- CN-A- 102 469 557
- KR-A- 20120 126 206
- CEWIT: "Transition Time Reduction for Small Cell On/Off", 3GPP DRAFT; R1-141686 TRANSITION TIME REDUCTION FOR SMALLCELL ONOFF, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. RAN WG1, no. Shenzhen, P.R.China; 20140331 - 20140404 30 March 2014 (2014-03-30), XP050787353, Retrieved from the Internet: URL:http://www.3gpp.org/ftp/Meetings_3GPP_ SYNC/RAN1/Docs/ [retrieved on 2014-03-30]
- ALCATEL-LUCENT SHANGHAI BELL ET AL: "Small Cell Discovery Performance based on UL Signals", 3GPP DRAFT; R1-135166 SMALL CELL ON_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20131111 - 20131115 13 November 2013 (2013-11-13), XP050734866, Retrieved from the Internet: URL:http://www.3gpp.org/ftp/Meetings_3GPP_ SYNC/RAN/RAN1/Docs/ [retrieved on 2013-11-13]
- HIROYUKI ISHII ET AL: "A novel architecture for LTE-B :C-plane/U-plane split and Phantom Cell concept", 2012 IEEE GLOBECOM WORKSHOPS (GC WKSHPS 2012) : ANAHEIM, CALIFORNIA, USA, 3 - 7 DECEMBER 2012, IEEE, PISCATAWAY, NJ, 3 December 2012 (2012-12-03), pages 624-630, XP032341446, DOI: 10.1109/GLOCOMW.2012.6477646 ISBN: 978-1-4673-4942-0

## Description

### TECHNICAL FIELD

The present invention relates to the communications field, and in particular, to a cell access method, a base station, user equipment, and a system.

### BACKGROUND

It has become a consensus in the industry that a massive multiple-input multiple-output (Massive Multiple-Input Multiple-Output, Massive MIMO) technology can improve spectral efficiency and improve system energy efficiency.

Costs and an antenna volume limit popularity of the massive MIMO technology. On one hand, a massive MIMO system needs a large quantity of radio frequency paths, that is, needs a large quantity of power amplifiers, but an existing W-level power amplifier is expensive, and accounts for about 70% of total costs of a radio frequency path. On the other hand, a size of a commercial antenna is generally 80 cm to 120 cm, and if the existing W-level power amplifier is still used, an antennas volume will inevitably increases manyfold as a path quantity increases, which is inconvenient for deployment. Therefore, to popularize the massive MIMO technology, a feasible method is to use an mW-level power amplifier with lower costs and a smaller volume to replace the current W-level power amplifier.

A transmit power on a base station side in an existing Long Term Evolution (Long Term Evolution, LTE) system is 40 W (46 dBm), and use of an mW-level power amplifier means that the transmit power is reduced to below 1 W (30 dBm) and a signal power is reduced by 16 dB. From a perspective of a link budget, to further ensure that system coverage remains unchanged after a power amplifier level is reduced to an mW level, an antenna system needs to contribute a gain of at least 16 dB. It may be learned, by analyzing eigenvalues in different antenna configurations in the massive MIMO system, that an eigenvalue gain of 25 dB can be provided when an antenna quantity is greater than 64 (16H4V), that is, requirements for reducing a power amplifier to an mW level as well as meeting the link budget (25 dB > 16 dB) can be met by weighting data by means of precoding (Precoding).

However, to weight data by means of precoding, a channel matrix H needs to be acquired according to real-time channel information and the H is processed to generate a weighted value required in precoding, but the channel information is related to a location of user equipment (User equipment, UE) and a channel environment. Therefore, weighted data obtained by means of precoding can be received only by specific UE. For user equipments that perform initial access, a system does not have channel information (Channel State Information, CSI) of these user equipments, and data transmission cannot be performed with these user equipments.

Therefore, the user equipment that performs initial access cannot measure a downlink signal sent by using the massive MIMO or feed back the channel matrix H to a base station, and the base station cannot perform processing according to measurement information to generate the weighted value required in precoding, and consequently the user equipment cannot complete cell selection and access operations.

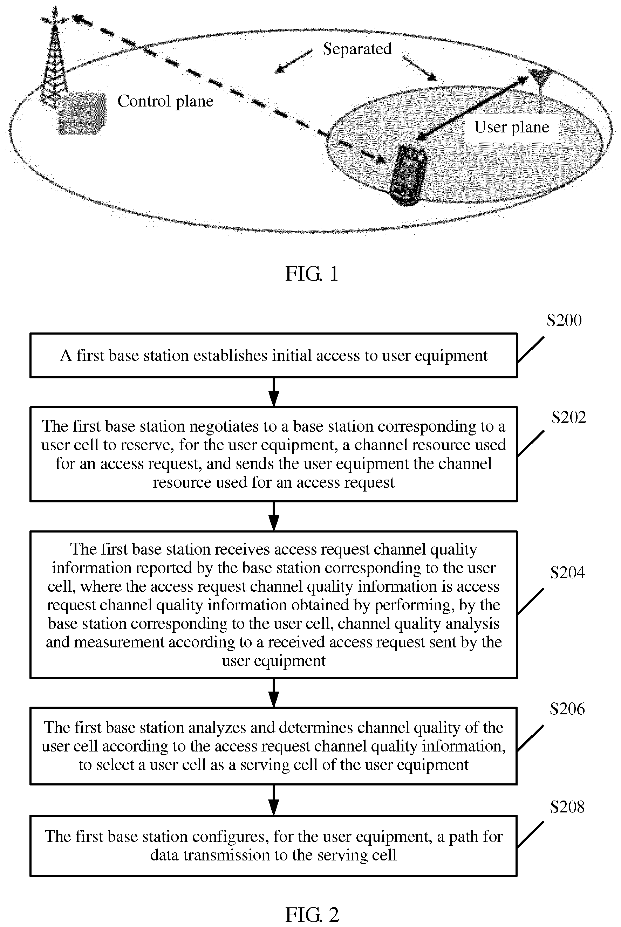

The prior art discloses a technical solution, proposed for LTE-B, in which control is separated from bearing. As shown in FIG. 1, a macro base station operates on a low frequency band and sends control-plane and data-plane channels like a conventional base station, and a micro base station is used for capacity enhancement, and sends only a data channel, but does not send a cell-level signal or channel. To resolve a problem, which is similar to the problem of the foregoing technology in which precoding is performed by using the massive MIMO, in the technical solution in which control is separated from bearing that because the micro base station does not send a cell-level channel/signal, a user cannot complete measurement and synchronization of the micro base station, a downlink detection channel used for measurement and synchronization of a data transmission base station is designed. However, the downlink detection channel must provide wide coverage, to ensure that the downlink detection channel can be received by all users who enter a cell. Therefore, in the technical solution in which control is separated from bearing, data cannot be sent by means of precoding, a signal strength is still of a W level, and a W-level power amplifier still needs to be used; consequently, a purpose of reducing a power amplifier level and finally introducing the massive MIMO technology to a micro cell cannot be achieved.

CEWiT "Transition Time Reduction for Small Cell On/Off" 3GPP draft R1-141686 describes a procedure for reducing the small cell on/off transition time using fast handover, based on uplink sensing and network assistance information.

Alcatel-Lucent Shanghai Bell et al "Small Cell Discovery Performance based on UL Signals" 3GPP draft R1-135166 describes a small cell discovery enhancement scheme for dormant small cells having reduced transition time.

### SUMMARY

Embodiments of the present invention provide a cell access method, a base station, user equipment, and a system, which resolve cell selection and access technical problems in the prior art caused after a massive MIMO technology is introduced to a micro cell.

Aspects of the invention are provided in the claims.

According to the embodiments of the present invention, a micro-cell base station side measures and analyzes an uplink access request of UE, and reports a measurement result to a macro-cell base station side, which replaces the UE in measuring a downlink signal and performing feedback, thereby completing micro cell selection and access for the user equipment, resolving cell selection and access technical problems in the prior art caused after a massive MIMO technology is introduced to a micro cell, and improving a hotspot capacity by using an advantage of the massive MIMO technology in a wireless access system as well as reducing a power amplifier level.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic structural diagram of a cell access method according to an embodiment of the present invention;
FIG. 2 is a schematic flowchart of a cell access method according to an embodiment of the present invention;
FIG. 3 is a schematic flowchart of another embodiment of a cell access method according to the present invention;
FIG. 4 is a schematic diagram of uplink sending performed after UE and a macro cell implement downlink synchronization according to the present invention;
FIG. 5 is a schematic diagram of uplink sending performed after UE and a macro cell implement uplink and downlink synchronization according to the present invention;
FIG. 6 is a schematic diagram of calculating an uplink synchronization time amount from UE to a base station corresponding to a serving cell according to the present invention;
FIG. 7 is a schematic flowchart of another embodiment of a cell access method according to the present invention;
FIG. 8 is a schematic flowchart of another embodiment of a cell access method according to the present invention;
FIG. 9 is a schematic flowchart of another embodiment of a cell access method according to the present invention;
FIG. 10 is a schematic flowchart of another embodiment of a cell access method according to the present invention;
FIG. 11 is a schematic structural diagram of a base station according to an embodiment of the present invention;
FIG. 12 is a schematic structural diagram of a data path configuration module according to the present invention;
FIG. 13 is a schematic structural diagram of another embodiment of a base station according to the present invention;
FIG. 14 is a schematic structural diagram of a channel quality analysis and sending module according to the present invention;
FIG. 15 is a schematic structural diagram of another embodiment of a base station according to the present invention;
FIG. 16 is a schematic structural diagram of another embodiment of a base station according to the present invention;
FIG. 17 is a schematic structural diagram of user equipment according to the present invention;
FIG. 18 is a schematic structural diagram of another embodiment of user equipment according to the present invention;
FIG. 19 is a schematic structural diagram of another embodiment of user equipment according to the present invention;
FIG. 20 is a schematic structural diagram of a network system according to the present invention;
FIG. 21 is a schematic structural diagram of a base station device according to an embodiment of the present invention;
FIG. 22 is a schematic structural diagram of another embodiment of a base station device according to the present invention; and
FIG. 23 is a schematic structural diagram of another embodiment of user equipment according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

Referring to FIG. 2, FIG. 2 is a schematic flowchart of a cell access method according to an embodiment of the present invention. The method is described from a perspective of a macro-cell base station (that is, a perspective of a macro base station), and the method includes:
Step S200: A first base station establishes initial access to user equipment.

Specifically, first base stations in embodiments of the present invention may be macro base stations, and that a first base station establishes initial access to user equipment UE is as follows: the UE accesses a macro cell.

Step S202: The first base station negotiates with a base station corresponding to a user cell to reserve, for the user equipment, a channel resource used for an access request, and sends the user equipment the channel resource used for an access request.

Specifically, the macro cell may select a to-be-measured user cell (that is, a user-dedicated cell), and then negotiate with a base station corresponding to the selected candidate user cell to reserve, for the user equipment, the channel resource used for an access request. It should be noted that, in the embodiments of the present invention, base stations corresponding to user cells are micro base stations, that is, base stations in a micro cell, and are collectively referred to as second base stations in the embodiments of the present invention.

It may be understood that the to-be-measured user cell may be all user cells in coverage of the macro cell, or the to-be-measured user cell may be a user cell that is selected by performing filtering by the macro cell according to location information of a user and that can cover a location of the user.

Step S204: The first base station receives access request channel quality information reported by the base station corresponding to the user cell, where the access request channel quality information is access request channel quality information obtained by performing, by the base station corresponding to the user cell, channel quality analysis and measurement according to a received access request sent by the user equipment.

Specifically, after receiving channel resources that are used for access requests, corresponding to all user cells, and sent by the macro cell, the UE may initiate an access request/access requests to one or more candidate user cells (that is, to a base station/base stations corresponding to the one or more candidate user cells) according to the channel resources. After receiving the access request, the base station corresponding to the user cell performs channel quality analysis and measurement on the access request to obtain the access request channel quality information, and then reports respective access request channel quality information (that is, channel quality measurement result information) to the first base station. It may be understood that the channel quality measurement result information further includes other necessary information such as a UE identifier.

Step S206: The first base station analyzes and determines channel quality of the user cell according to the access request channel quality information, to select a user cell as a serving cell of the user equipment.

Specifically, the first base station may select, according to channel quality corresponding to all the user cells, a user cell with best channel quality as the serving cell of the user equipment.

Step S208: The first base station configures, for the user equipment, a path for data transmission to the serving cell.

Specifically, after receiving the path that is for data transmission to the serving cell and that is configured by the first base station for the UE, the UE may send an uplink reference signal (Reference Signal, RS) to a base station corresponding to the serving cell, then the base station corresponding to the serving cell establishes a connection to the UE, the UE completes access to the serving cell, the base station corresponding to the serving cell may perform data transmission to the UE, and the base station corresponding to the serving cell weights data by means of precoding, and sends the weighted data to the UE.

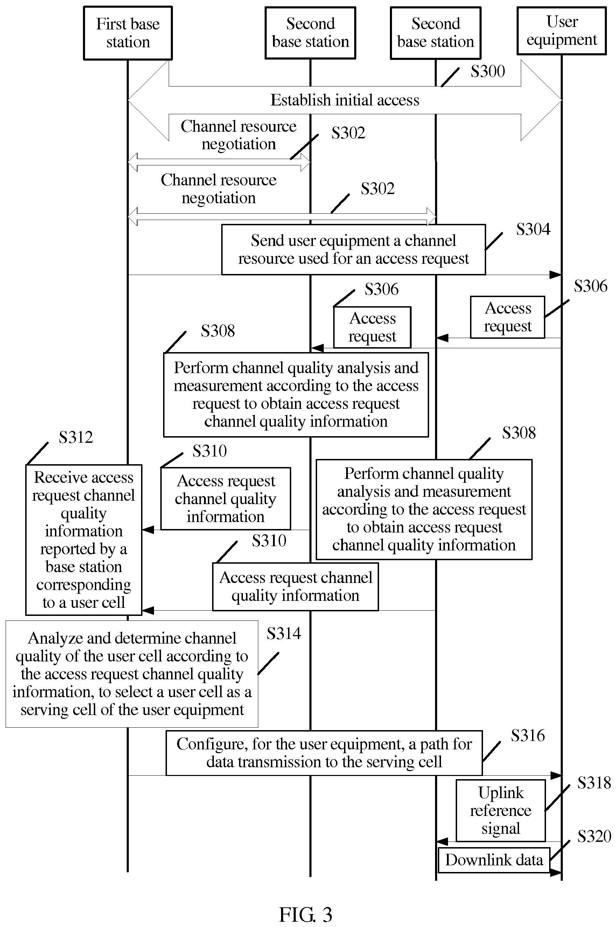

Further, FIG. 3 shows a schematic flowchart of another embodiment of a cell access method according to the present invention. The method is described with reference to a macro-cell base station (that is, a first base station), a micro-cell base station (that is, a second base station), and user equipment, and the method includes:

Step S300: The first base station establishes initial access to the user equipment.

Specifically, refer to step S200 in the embodiment in FIG. 2. Details are not described herein.

Step S302: The first base station negotiates with the second base station to reserve, for the user equipment, a channel resource used for an access request.

Specifically, this embodiment uses two second base stations as an example for description, but is not limited to the two second base stations. Reference may be made to step S202 in the embodiment in FIG. 2, and details are not described herein.

Step S304: The first base station sends the user equipment the channel resource used for an access request.

Step S306: The user equipment sends an access request to the second base station.

Specifically, after receiving channel resources that are used for access requests, corresponding to all user cells, and sent by a macro cell, the UE may initiate an access request/access requests to one or more candidate user cells (that is, to a base station/base stations corresponding to the one or more candidate user cells) according to the channel resources.

Step S308: The second base station performs channel quality analysis and measurement according to the access request to obtain access request channel quality information.

Step S310: The second base station sends the access request channel quality information to the first base station.

Specifically, after receiving the access request, the second base station (that is, the base station corresponding to the user cell) performs channel quality analysis and measurement on the access request, to obtain the access request channel quality information, and then reports respective access request channel quality information (that is, channel quality measurement result information) to the first base station. It may be understood that the channel quality measurement result information further includes other necessary information such as a UE identifier.

Step S312: The first base station receives the access request channel quality information reported by a base station corresponding to a user cell.

Step S314: The first base station analyzes and determines channel quality of the user cell according to the access request channel quality information, to select a user cell as a serving cell of the user equipment.

Specifically, the first base station may select, according to channel quality corresponding to all the user cells, a user cell with best channel quality as the serving cell of the user equipment.

Step S316: The first base station configures, for the user equipment, a path for data transmission to the serving cell.

Step S318: After receiving the path that is for data transmission to the serving cell and that is configured by the first base station, the user equipment sends an uplink reference signal to a base station corresponding to the serving cell.

Step S320: After receiving the uplink reference signal sent by the user equipment, the second base station weights downlink data by means of precoding, and sends the weighted downlink data to the user equipment.

Specifically, the second base station in step S320 is the base station corresponding to the serving cell. The second base station establishes a connection to the UE according to the uplink RS sent by the UE, the UE completes access to the serving cell, the second base station may perform data transmission to the UE, and the second base station weights the data by means of precoding, and sends the weighted data to the UE.

Further, to ensure that the data can be correctly received, synchronization between the UE and the serving cell needs to be completed, which may be specifically as follows:

Step S200 further includes: the first base station performs downlink synchronization with the user equipment and then performs uplink synchronization, to obtain an uplink timing advance from the user equipment to the first base station, and sends the uplink timing advance to the user equipment. Specifically, the UE may complete downlink synchronization with the macro cell at the same time of establishing initial access to the first base station, and then sends the access request to the second base station according to downlink synchronization.

Specifically, an uplink synchronization time amount from the UE to the base station corresponding to the serving cell may be finally calculated on a first base station side, or may be finally calculated on a base station side corresponding to the serving cell, or may be finally calculated by the user equipment.

Case 1: The uplink synchronization time amount is calculated on the first base station side.

In this case, the access request channel quality information received by the first base station in step S204 includes an uplink time difference from the user equipment to the second base station, and the uplink time difference is a time difference obtained by performing, by the second base station, a subtractive operation on an expected arrival time at which the access request sent by the user equipment is to be received and an actual arrival time at which the access request sent by the user equipment is received.

Step S208 may specifically include: subtracting the uplink time difference from the uplink timing advance, to obtain the uplink synchronization time amount from the user equipment to the base station corresponding to the serving cell; and sending configuration information that includes the uplink synchronization time amount to the user equipment, where the configuration information is used to configure, for the user equipment, the path for data transmission to the serving cell. That is, after determining, by means of analysis, the base station corresponding to the serving cell, the first base station subtracts, from the uplink timing advance, the uplink time difference of the base station corresponding to the serving cell, to obtain the uplink synchronization time amount from the user equipment to the base station corresponding to the serving cell.

Case 2: The uplink synchronization time amount is calculated by the base station corresponding to the serving cell.

In this case, step S208 may specifically include: sending configuration information that includes the uplink timing advance to the second base station, where the configuration information is used to configure, for the user equipment, the path for data transmission to the serving cell. Specifically, the first base station adds, to the configuration information, the foregoing uplink timing advance that is from the UE to the first base station and obtained by means of calculation. After receiving the configuration information that includes the uplink timing advance, the base station that is determined by the first base station by means of analysis to be corresponding to the serving cell subtracts an uplink time difference from the uplink timing advance, to obtain the uplink synchronization time amount from the user equipment to the base station corresponding to the serving cell. The uplink time difference is a time difference obtained by performing, by the base station corresponding to the serving cell, a subtractive operation on an expected arrival time at which the access request sent by the user equipment is to be received and an actual arrival time at which the access request sent by the user equipment is received.

Case 3: The uplink synchronization time amount is finally calculated by the user equipment.

In this case, configuration information sent to the user equipment in step S208 includes an uplink time difference from the user equipment to the second base station. After receiving the configuration information, the user equipment subtracts the uplink time difference from the uplink timing advance, to obtain the uplink synchronization time amount from the user equipment to the base station corresponding to the serving cell, and sends, according to the uplink synchronization time amount, the uplink reference signal to the base station corresponding to the serving cell.

Still further, the following uses a subframe in an LTE system as an example to illustrate a process of calculating an uplink synchronization time amount from UE to a base station corresponding to a serving cell in an embodiment of the present invention.

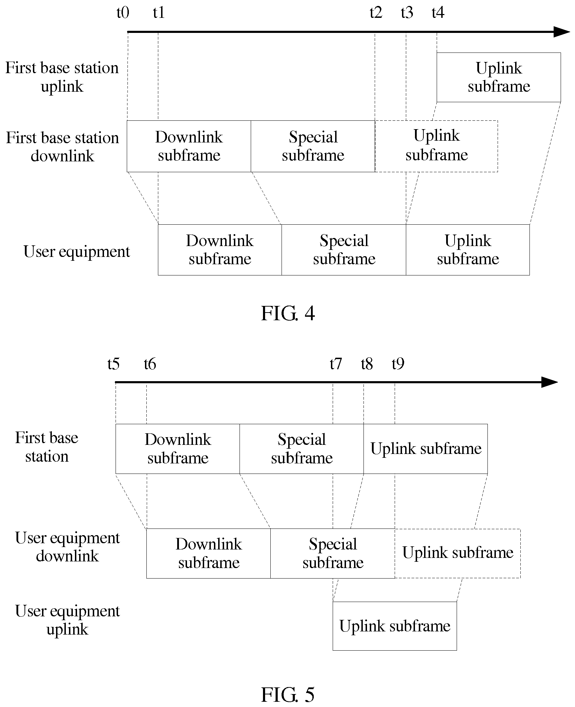

FIG. 4 shows a schematic diagram of uplink sending performed after UE and a macro cell implement downlink synchronization according to the present invention. After completing downlink synchronization with a first base station in a process of establishing initial access to the first base station, the UE performs uplink sending by using t1 as a time reference. It may be learned from FIG. 4 that the UE sends uplink data at a time point t3, and a first base station side does not receive the uplink data until a time point t4, resulting in a delay of t4-t2 in comparison to a time point t2 at which the uplink data is expected to be received by the first base station, where t4-t2 is an uplink timing advance TA_Macro from the UE to the first base station, that is, the UE needs to send uplink data to the first base station t4-t2 in advance.

FIG. 5 shows a schematic diagram of uplink sending performed after UE and a macro cell implement uplink and downlink synchronization according to the present invention. After learning, from FIG. 4, the uplink timing advance TA_Macro from the UE to the first base station, the UE sends uplink data to the first base station according to the TA_Macro. If the uplink data arrives at the first base station exactly at a time point t8, uplink and downlink synchronization between the UE and the first base station succeeds. It may be understood that t4-t3 in FIG. 4 is equal to t8-t7 in FIG. 5, and t4-t2 in FIG. 4 is equal to t9-t7 in FIG. 5.

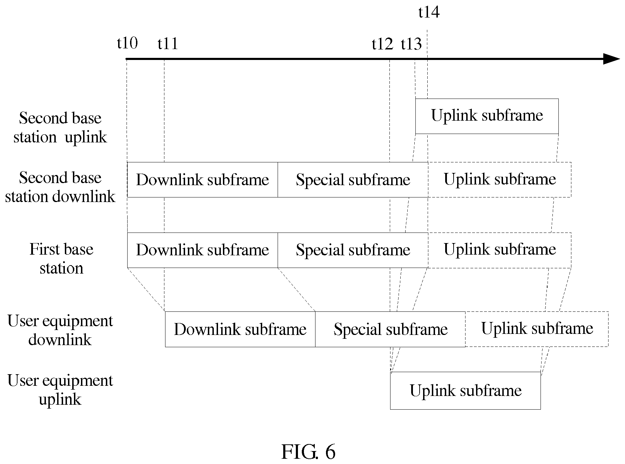

FIG. 6 shows a schematic diagram of calculating an uplink synchronization time amount from UE to a base station corresponding to a serving cell according to the present invention. Similarly, the UE sends an access request to a second base station according to the TA_Macro, and the second base station expects the access request to arrive at a time point t14 (that is, a time point at which the access request is received by the first base station in FIG. 6). Finally, if the second base station finds that the access request arrives at a time point t13, from a perspective of the second base station, the access request arrives t14-t13 in advance in comparison to a time point at which the access request arrives at the macro cell. Therefore, the uplink synchronization time amount from the UE to the base station corresponding to the serving cell is TA_Picol = TA_Macro-(t14-t13).

It may be understood that t14-t13 may be a positive value or a negative value, that is, the time point t13 at which the second base station finds that the access request actually arrives may be earlier than the time point t14, or may be later than the time point t14. When t14-t13 is a positive value, it indicates that the access request arrives at the second base station in advance; or when t14-t13 is a negative value, it indicates that arrival of the access request at the second base station is delayed. In FIG. 4 to FIG. 6, t14 and t2 are known information on a base station side, and values of t4 and t13 are obtained through measurement. Therefore, the uplink synchronization time amount from the UE to the base station corresponding to the serving cell can be obtained based on the foregoing method.

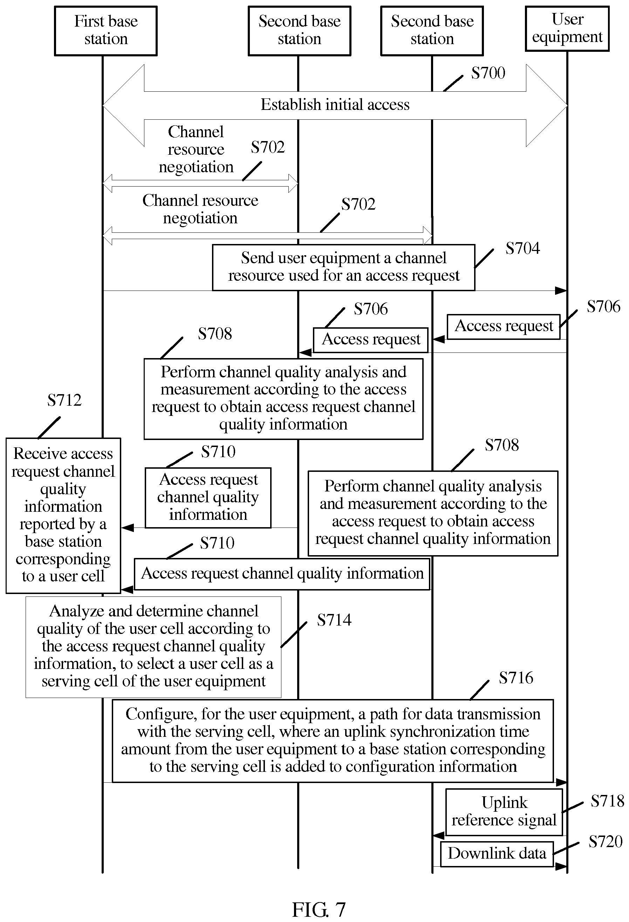

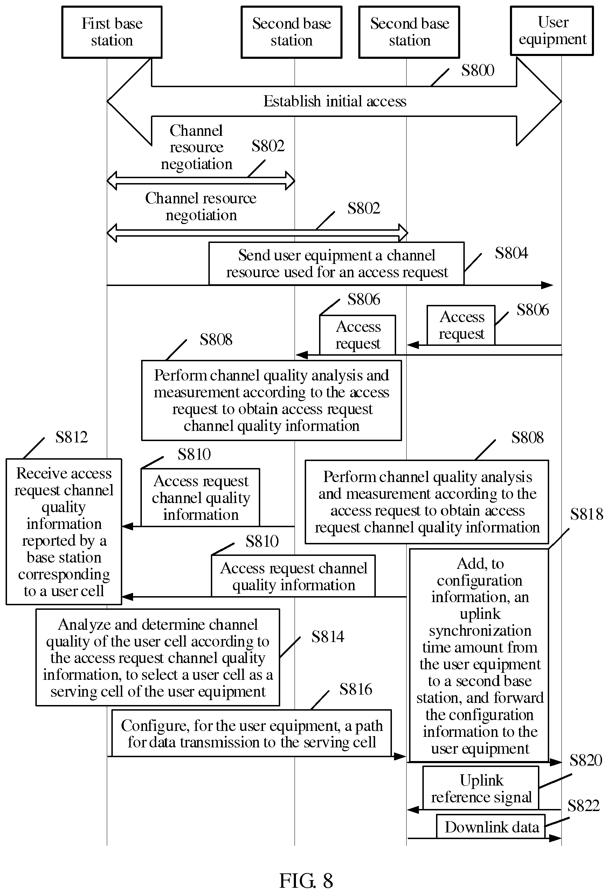

The following further illustrates a cell access method provided in the present invention with reference to FIG. 7 and FIG. 8. FIG. 7 shows a schematic flowchart of another embodiment of a cell access method according to the present invention. The method is described with reference to a macro-cell base station (that is, a first base station), a micro-cell base station (that is, a second base station), and user equipment, and the method includes:
Step S700: The first base station establishes initial access to the user equipment.
Step S702: The first base station negotiates with the second base station to reserve, for the user equipment, a channel resource used for an access request.
Step S704: The first base station sends the user equipment the channel resource used for an access request.
Step S706: The user equipment sends an access request to the second base station.
Step S708: The second base station performs channel quality analysis and measurement according to the access request to obtain access request channel quality information.

Specifically, for step S700 to step S708, refer to the descriptions of the foregoing step S300 to step S308. Details are not described herein.

Step S710: The second base station sends the access request channel quality information to the first base station.

Specifically, the access request channel quality information includes an uplink time difference from the user equipment to the second base station, and the uplink time difference is a time difference obtained by performing, by the second base station, a subtractive operation on an expected arrival time at which the access request sent by the user equipment is to be received and an actual arrival time at which the access request sent by the user equipment is received.

Step S712: The first base station receives the access request channel quality information reported by a base station corresponding to a user cell.

Step S714: The first base station analyzes and determines channel quality of the user cell according to the access request channel quality information, to select a user cell as a serving cell of the user equipment.

Step S716: The first base station configures, for the user equipment, a path for data transmission to the serving cell, where an uplink synchronization time amount from the user equipment to a base station corresponding to the serving cell is added to the configuration information.

Specifically, after determining, by means of analysis, the base station corresponding to the serving cell, the first base station subtracts, from the uplink timing advance, the uplink time difference of the base station corresponding to the serving cell, to obtain the uplink synchronization time amount from the user equipment to the base station corresponding to the serving cell, and adds the uplink synchronization time amount to the configuration information configured for the UE, where the configuration information is used to configure, for the user equipment, the path for data transmission to the serving cell.

Step S718: After receiving the path that is for data transmission to the serving cell and that is configured by the first base station, the user equipment sends an uplink reference signal to the base station corresponding to the serving cell.

It should be noted that, alternatively, the uplink synchronization time amount from the user equipment to the base station corresponding to the serving cell may be calculated on a user equipment side. That is, the configuration information received by the user equipment includes the uplink time difference from the user equipment to the second base station, and after receiving the configuration information, the user equipment subtracts the uplink time difference from the uplink timing advance, to obtain the uplink synchronization time amount from the user equipment to the base station corresponding to the serving cell, and sends, according to the uplink synchronization time amount, the uplink reference signal to the base station corresponding to the serving cell.

Step S720: After receiving the uplink reference signal sent by the user equipment, the second base station weights downlink data by means of precoding, and sends the weighted downlink data to the user equipment.

Specifically, after step S718 is performed, the second base station may further send the user equipment a downlink synchronization signal obtained by means of precoding processing or a preset dedicated downlink synchronization signal, to complete downlink synchronization with the user equipment, and then perform step S720.

FIG. 8 shows a schematic flowchart of another embodiment of a cell access method according to the present invention. The method is described with reference to a macro-cell base station (that is, a first base station), a micro-cell base station (that is, a second base station), and user equipment, and the method includes:
Step S800: The first base station establishes initial access to the user equipment.
Step S802: The first base station negotiates with the second base station to reserve, for the user equipment, a channel resource used for an access request.
Step S804: The first base station sends the user equipment the channel resource used for an access request.
Step S806: The user equipment sends an access request to the second base station.
Step S808: The second base station performs channel quality analysis and measurement according to the access request to obtain access request channel quality information.

Specifically, for step S800 to step S808, refer to the descriptions of the foregoing step S300 to step S308. Details are not described herein.

Step S810: The second base station sends the access request channel quality information to the first base station.

Step S812: The first base station receives the access request channel quality information reported by a base station corresponding to a user cell.

Step S814: The first base station analyzes and determines channel quality of the user cell according to the access request channel quality information, to select a user cell as a serving cell of the user equipment.

Step S816: The first base station configures, for the user equipment, a path for data transmission to the serving cell.

Specifically, after determining, by means of analysis, a base station corresponding to the serving cell, the first base station sends configuration information that includes an uplink timing advance to the second base station, where the configuration information is used to configure, for the user equipment, the path for data transmission to the serving cell, and the uplink timing advance is an uplink timing advance that is from the user equipment to the first base station and that is obtained by performing, by the first base station, downlink synchronization with the user equipment.

Step S818: After receiving the path that is for data transmission to the serving cell and that is configured by the first base station for the user equipment, the second base station adds, to configuration information, an uplink synchronization time amount from the user equipment to the second base station, and forwards the configuration information to the user equipment.

Specifically, the second base station performs a subtractive operation on an expected arrival time at which the access request sent by the user equipment is to be received and an actual arrival time at which the access request sent by the user equipment is received, to obtain an uplink time difference from the user equipment to the second base station. After receiving the configuration information that includes the uplink timing advance, the base station that is determined by the first base station by means of analysis to be corresponding to the serving cell subtracts the uplink time difference from the uplink timing advance, to obtain an uplink synchronization time amount from the user equipment to the base station corresponding to the serving cell.

Step S820: After receiving the path that is for data transmission to the serving cell and that is configured by the first base station, the user equipment sends an uplink reference signal to a base station corresponding to the serving cell.

It should be noted that, alternatively, the uplink synchronization time amount from the user equipment to the base station corresponding to the serving cell may be calculated on a user equipment side. That is, the configuration information received by the user equipment includes the uplink time difference from the user equipment to the second base station, and after receiving the configuration information, the user equipment subtracts the uplink time difference from the uplink timing advance, to obtain the uplink synchronization time amount from the user equipment to the base station corresponding to the serving cell, and sends, according to the uplink synchronization time amount, the uplink reference signal to the base station corresponding to the serving cell.

Step S822: After receiving the uplink reference signal sent by the user equipment, the second base station weights downlink data by means of precoding, and sends the weighted downlink data to the user equipment.

Specifically, in step S820, after receiving the configuration information that includes the uplink timing advance, and before forwarding the configuration information to the user equipment, the second base station may further send the user equipment a downlink synchronization signal obtained by means of precoding processing or a preset dedicated downlink synchronization signal, to complete downlink synchronization with the user equipment, and then perform the step of adding, to configuration information, an uplink synchronization time amount from the user equipment to the second base station, and forwarding the configuration information to the user equipment.

It should be noted that, in this embodiment of the present invention, the access request sent by the UE to the second base station (that is, the micro-cell base station) includes an access request for cell handover by the UE, and the UE may trigger the access request for cell handover according to a channel quality change of each user cell, and complete cell handover by using the cell access method provided in this embodiment of the present invention.

According to this embodiment of the present invention, a micro-cell base station side measures and analyzes an uplink access request of UE, and reports a measurement result to a macro-cell base station side, which replaces the UE in measuring a downlink signal and performing feedback, thereby completing micro cell selection and access for the user equipment, resolving cell selection and access technical problems in the prior art caused after a massive MIMO technology is introduced to a micro cell, and improving a hotspot capacity by using an advantage of the massive MIMO technology in a wireless access system as well as reducing a power amplifier level.

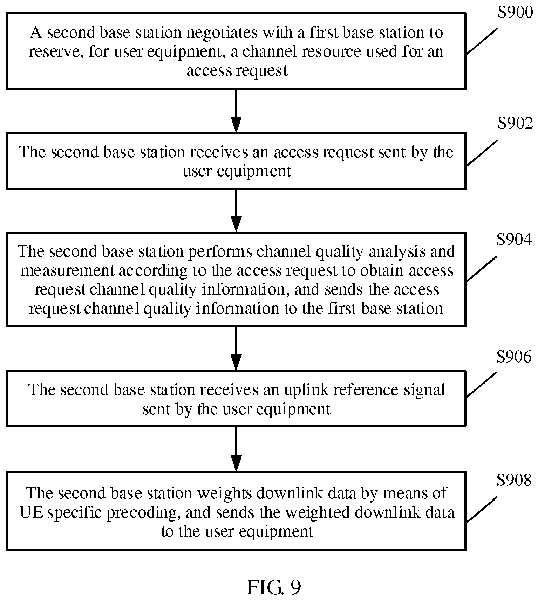

Correspondingly, with reference to a schematic flowchart, shown in FIG. 9, of another embodiment of a cell access method provided in the present invention, the following describes an implementation manner of the cell access method provided in the present invention from a perspective of a micro-cell base station (that is, a perspective of a second base station). The method specifically includes:
Step S900: The second base station negotiates with a first base station to reserve, for user equipment, a channel resource used for an access request.
Step S902: The second base station receives an access request sent by the user equipment.
Step S904: The second base station performs channel quality analysis and measurement according to the access request to obtain access request channel quality information, and sends the access request channel quality information to the first base station.
Step S906: The second base station receives an uplink reference signal sent by the user equipment.
Step S908: The second base station weights downlink data by means of precoding, and then sends the weighted downlink data to the user equipment.

Specifically, step S904 may include: performing a subtractive operation on an expected arrival time at which the access request sent by the user equipment is to be received and an actual arrival time at which the access request sent by the user equipment is received, to obtain an uplink time difference from the user equipment to the second base station; and
performing channel quality analysis and measurement according to the access request to obtain the access request channel quality information; and adding the uplink time difference to the access request information quality information, and then sending the access request channel quality information to the first base station.

Further, this embodiment of the present invention may further include:
performing, by the second base station, a subtractive operation on an expected arrival time at which the access request sent by the user equipment is to be received and an actual arrival time at which the access request sent by the user equipment is received, to obtain an uplink time difference from the user equipment to the second base station; receiving configuration information that includes an uplink timing advance and that is sent by the first base station, where the configuration information is used to configure, for the user equipment, a path for data transmission to the serving cell, and the uplink timing advance is an uplink timing advance that is from the user equipment to the first base station and that is obtained by performing, by the first base station, downlink synchronization with the user equipment and then performing uplink synchronization; and adding, to the configuration information, the uplink time difference from the user equipment to the second base station, and sending the configuration information to the user equipment.

Still further, this embodiment of the present invention may further include:
performing, by the second base station, a subtractive operation on an expected arrival time at which the access request sent by the user equipment is to be received and an actual arrival time at which the access request sent by the user equipment is received, to obtain an uplink time difference from the user equipment to the second base station; receiving configuration information that includes an uplink timing advance and that is sent by the first base station, where the configuration information is used to configure, for the user equipment, a path for data transmission to the serving cell, and the uplink timing advance is an uplink timing advance that is from the user equipment to the first base station and that is obtained by performing, by the first base station, downlink synchronization with the user equipment and then performing uplink synchronization; subtracting the uplink time difference from the uplink timing advance, to obtain an uplink synchronization time amount from the user equipment to a base station corresponding to the serving cell; and sending configuration information that includes the uplink synchronization time amount to the user equipment, where the configuration information is used to configure, for the user equipment, the path for data transmission to the serving cell.

Still further, after the receiving an uplink reference signal sent by the user equipment in step S906, the method may further include: sending the user equipment a downlink synchronization signal obtained by means of precoding processing or a preset dedicated downlink synchronization signal, to complete downlink synchronization with the user equipment.

Still further, after the receiving, by the second base station, configuration information that includes an uplink timing advance and that is sent by the first base station, and before the sending the configuration information to the user equipment, the method may further include: sending the user equipment a downlink synchronization signal obtained by means of precoding processing or a preset dedicated downlink synchronization signal, to complete downlink synchronization with the user equipment.

It should be noted that, for details about this embodiment of the present invention in FIG. 9, reference may be correspondingly made to the foregoing method embodiments in FIG. 2 to FIG. 8, and details are not described herein.

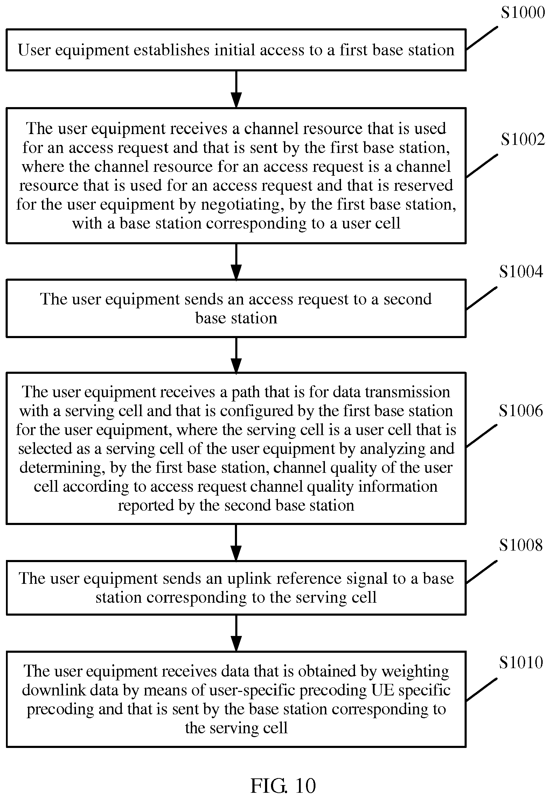

Correspondingly, with reference to a schematic flowchart, shown in FIG. 10, of another embodiment of a cell access method provided in the present invention, the following describes an implementation manner of the cell access method provided in the present invention from a perspective of user equipment (that is, a perspective of UE). The method specifically includes:
Step S1000: The user equipment establishes initial access to a first base station.
Step S1002: The user equipment receives a channel resource that is used for an access request and that is sent by the first base station, where the channel resource for the access request is a channel resource that is used for an access request and that is reserved for the user equipment by negotiating, by the first base station, with a base station corresponding to a user cell.
Step S1004: The user equipment sends an access request to a second base station.
Step S1006: The user equipment receives a path that is for data transmission to a serving cell and that is configured by the first base station for the user equipment, where the serving cell is a user cell that is selected as a serving cell of the user equipment by analyzing and determining, by the first base station, channel quality of the user cell according to access request channel quality information reported by the second base station.
Step S1008: The user equipment sends an uplink reference signal to a base station corresponding to the serving cell.
Step S1010: The user equipment receives data that is obtained by weighting downlink data by means of precoding and that is sent by the base station corresponding to the serving cell.

Specifically, step S1000 may include: performing, by the user equipment, downlink synchronization with the first base station and then performing uplink synchronization, to obtain an uplink timing advance from the user equipment to the first base station.

Step S1004 is specifically: sending the access request to the second base station according to the uplink timing advance.

Further, in this embodiment of the present invention, after the sending an uplink reference signal to a base station corresponding to the serving cell in step S1008, the method may further include: receiving a downlink synchronization signal that is obtained by means of precoding processing and that is sent by the base station corresponding to the serving cell, to complete downlink synchronization with the second base station; or receiving a preset dedicated downlink synchronization signal that is sent by the base station corresponding to the serving cell, to complete downlink synchronization with the second base station.

Alternatively, before configuration information sent by the first base station is received in step S1006, the method may further include: receiving a downlink synchronization signal that is obtained by means of precoding processing and that is sent by the base station corresponding to the serving cell, to complete downlink synchronization with the second base station; or receiving a preset dedicated downlink synchronization signal that is sent by the base station corresponding to the serving cell, to complete downlink synchronization with the second base station, where the configuration information is forwarded by the base station corresponding to the serving cell and is used for configuring, by the first base station for the user equipment, the path for data transmission to the serving cell.

The receiving data that is obtained by weighting downlink data by means of precoding and that is sent by the base station corresponding to the serving cell in step S1010 may include: receiving, according to downlink synchronization with the serving cell, the data that is obtained by weighting the downlink data by means of precoding and that is sent by the base station corresponding to the serving cell.

Still further, the configuration information received in step S1006 may include an uplink synchronization time amount from the user equipment to the base station corresponding to the serving cell, and in this case, step S1008 specifically includes: sending, by the user equipment according to the uplink synchronization time amount, the uplink reference signal to the base station corresponding to the serving cell; or
the configuration information received in step S1006 includes an uplink time difference from the user equipment to the base station corresponding to the serving cell, and in this case, step S1008 specifically includes: subtracting, by the user equipment, the uplink time difference from the uplink timing advance, to obtain an uplink synchronization time amount from the user equipment to the base station corresponding to the serving cell, and sending, according to the uplink synchronization time amount, the uplink reference signal to the base station corresponding to the serving cell.

It should be noted that, for details about this embodiment of the present invention in FIG. 10, reference may be correspondingly made to the foregoing method embodiments in FIG. 2 to FIG. 8, and details are not described herein.

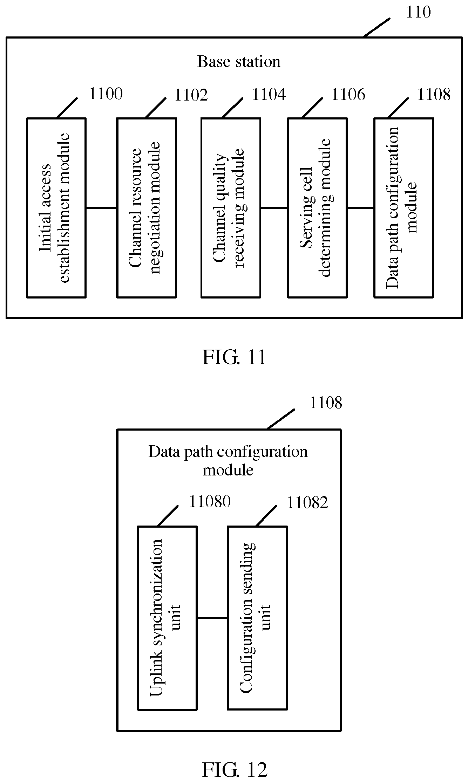

To better implement the foregoing solutions in the embodiments of the present invention, the following describes an implementation manner of an apparatus corresponding to the foregoing method with reference to a schematic structural diagram, shown in FIG. 11, of a base station provided in an embodiment of the present invention. A base station 110 in FIG. 11 is a macro-cell base station, and the base station 110 includes: an initial access establishment module 1100, a channel resource negotiation module 1102, a channel quality receiving module 1104, a serving cell determining module 1106, and a data path configuration module 1108.

The initial access establishment module 1100 is adapted to establish initial access to user equipment.

The channel resource negotiation module 1102 is adapted to: negotiate with a base station corresponding to a user cell to reserve, for the user equipment, a channel resource used for an access request, and send the user equipment the channel resource used for an access request.

The channel quality receiving module 1104 is adapted to receive access request channel quality information reported by the base station corresponding to the user cell, where the access request channel quality information is access request channel quality information obtained by performing, by the base station corresponding to the user cell, channel quality analysis and measurement according to a received access request sent by the user equipment.

The serving cell determining module 1106 is adapted to analyze and determine channel quality of the user cell according to the access request channel quality information, to select a user cell as a serving cell of the user equipment.

The data path configuration module 1108 is adapted to configure, for the user equipment, a path for data transmission to the serving cell.

Specifically, the base station 110 is a first base station, and the base station corresponding to the user cell is a second base station.

The initial access establishment module 1100 is further adapted to: perform downlink synchronization with the user equipment and then perform uplink synchronization, to obtain an uplink timing advance from the user equipment to the first base station, and send the uplink timing advance to the user equipment.

Further, the data path configuration module 1108 is specifically adapted to send configuration information that includes the uplink timing advance to the second base station, where the configuration information is used to configure, for the user equipment, the path for data transmission to the serving cell.

Still further, the access request channel quality information includes an uplink time difference from the user equipment to the second base station, and the uplink time difference is a time difference obtained by performing, by the second base station, a subtractive operation on an expected arrival time at which the access request sent by the user equipment is to be received and an actual arrival time at which the access request sent by the user equipment is received.

FIG. 12 shows a schematic structural diagram of a data path configuration module according to the present invention. The data path configuration module 1108 may include: an uplink synchronization unit 11080 and a configuration sending unit 11082.

The uplink synchronization unit 11080 is adapted to subtract the uplink time difference from the uplink timing advance, to obtain an uplink synchronization time amount from the user equipment to a base station corresponding to the serving cell.

The configuration sending unit 11082 is adapted to send configuration information that includes the uplink synchronization time amount to the user equipment, where the configuration information is used to configure, for the user equipment, the path for data transmission to the serving cell.

It should be noted that the base station 110 in this embodiment of the present invention may further include another conventional function module of a base station in the prior art, and functions of the function modules in the base station 110 may be specifically implemented according to the method in the foregoing method embodiment, and details are not described herein.

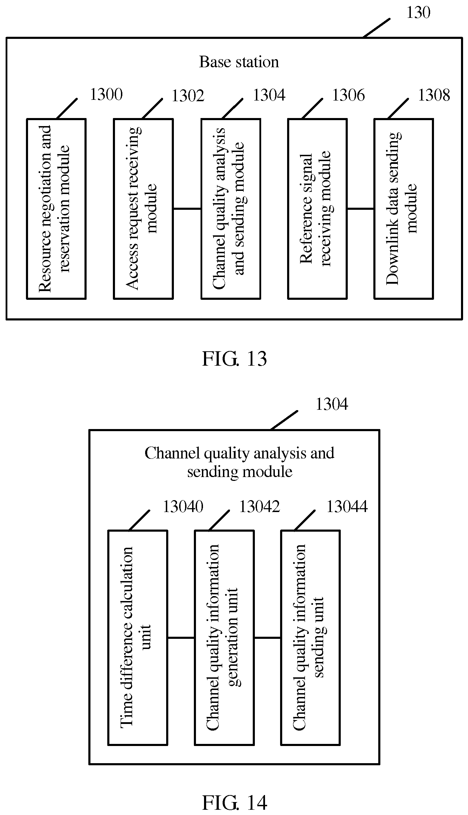

FIG. 13 shows a schematic structural diagram of another embodiment of a base station according to the present invention. A base station 130 in FIG. 13 is a second base station (that is, a micro-cell base station), and the base station 130 includes: a resource negotiation and reservation module 1300, an access request receiving module 1302, a channel quality analysis and sending module 1304, a reference signal receiving module 1306, and a downlink data sending module 1308.

The resource negotiation and reservation module 1300 is adapted to negotiate with a first base station to reserve, for user equipment, a channel resource used for an access request.

The access request receiving module 1302 is adapted to receive an access request sent by the user equipment.

The channel quality analysis and sending module 1304 is adapted to: perform channel quality analysis and measurement according to the access request to obtain access request channel quality information, and send the access request channel quality information to the first base station.

The reference signal receiving module 1306 is adapted to receive an uplink reference signal sent by the user equipment.

The downlink data sending module 1308 is adapted to: weight downlink data by means of precoding, and then send the weighted downlink data to the user equipment.

Specifically, FIG. 14 shows a schematic structural diagram of a channel quality analysis and sending module according to the present invention. The channel quality analysis and sending module 1304 includes: a time difference calculation unit 13040, a channel quality information generation unit 13042, and a channel quality information sending unit 13044.

The time difference calculation unit 13040 is adapted to perform a subtractive operation on an expected arrival time at which the access request sent by the user equipment is to be received and an actual arrival time at which the access request sent by the user equipment is received, to obtain an uplink time difference from the user equipment to the second base station.

The channel quality information generation unit 13042 is adapted to perform channel quality analysis and measurement according to the access request to obtain the access request channel quality information.

The channel quality information sending unit 13044 is adapted to: add the uplink time difference to the access request information quality information, and then send the access request channel quality information to the first base station.

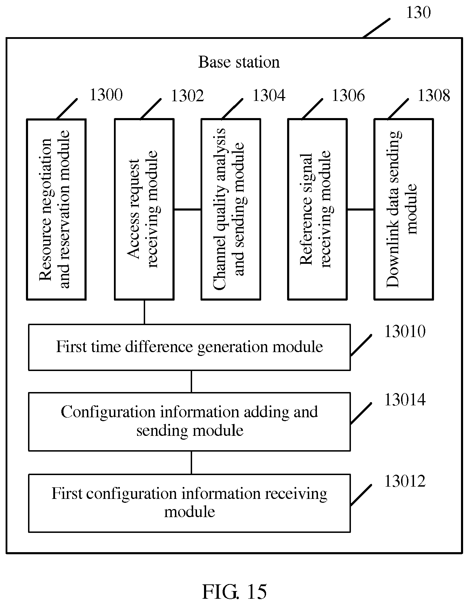

FIG. 15 shows a schematic structural diagram of another embodiment of a base station according to the present invention. In addition to the resource negotiation and reservation module 1300, the access request receiving module 1302, the channel quality analysis and sending module 1304, the reference signal receiving module 1306, and the downlink data sending module 1308, the base station 130 may include: a first time difference generation module 13010, a first configuration information receiving module 13012, and a configuration information adding and sending module 13014.

The first time difference generation module 13010 is adapted to perform a subtractive operation on an expected arrival time at which the access request sent by the user equipment is to be received and an actual arrival time at which the access request sent by the user equipment is received, to obtain an uplink time difference from the user equipment to the second base station.

The first configuration information receiving module 13012 is adapted to receive configuration information that includes an uplink timing advance and that is sent by the first base station, where the configuration information is used to configure, for the user equipment, a path for data transmission to the serving cell, and the uplink timing advance is an uplink timing advance that is from the user equipment to the first base station and that is obtained by performing, by the first base station, downlink synchronization with the user equipment and then performing uplink synchronization.

The configuration information adding and sending module 13014 is adapted to: add, to the configuration information, the uplink time difference from the user equipment to the second base station, and send the configuration information to the user equipment.

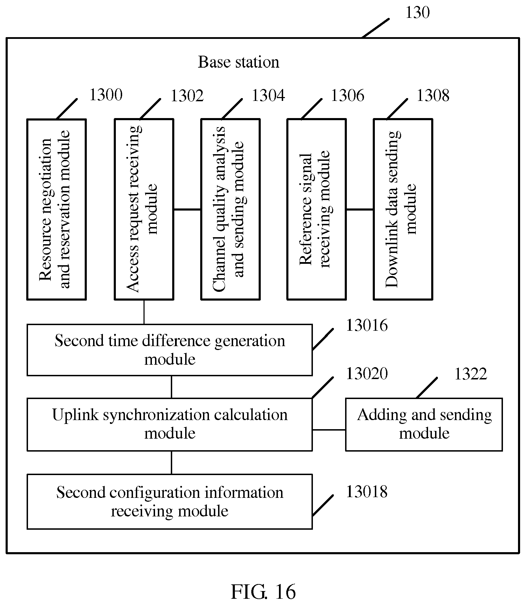

FIG. 16 shows a schematic structural diagram of another embodiment of a base station according to the present invention. In addition to the resource negotiation and reservation module 1300, the access request receiving module 1302, the channel quality analysis and sending module 1304, the reference signal receiving module 1306, and the downlink data sending module 1308, the base station 130 may include: a second time difference generation module 13016, a second configuration information receiving module 13018, an uplink synchronization calculation module 13020, and an adding and sending module 13022.

The second time difference generation module 13016 is adapted to perform a subtractive operation on an expected arrival time at which the access request sent by the user equipment is to be received and an actual arrival time at which the access request sent by the user equipment is received, to obtain an uplink time difference from the user equipment to the second base station.

The second configuration information receiving module 13018 is adapted to receive configuration information that includes an uplink timing advance and that is sent by the first base station, where the configuration information is used to configure, for the user equipment, a path for data transmission to the serving cell, and the uplink timing advance is an uplink timing advance that is from the user equipment to the first base station and that is obtained by performing, by the first base station, downlink synchronization with the user equipment and then performing uplink synchronization and then performing uplink synchronization.

The uplink synchronization calculation module 13020 is adapted to subtract the uplink time difference from the uplink timing advance, to obtain an uplink synchronization time amount from the user equipment to a base station corresponding to the serving cell.

The adding and sending module 13022 is adapted to send configuration information that includes the uplink synchronization time amount to the user equipment, where the configuration information is used to configure, for the user equipment, the path for data transmission to the serving cell.

Still further, the base station 130 may further include a first downlink synchronization module, adapted to: after the reference signal receiving module 1306 receives the uplink reference signal sent by the user equipment, send the user equipment a downlink synchronization signal obtained by means of precoding processing or a preset dedicated downlink synchronization signal, to complete downlink synchronization with the user equipment; or
the base station 130 may further include a second downlink synchronization module, adapted to: after the configuration information receiving module 13012 receives the configuration information, and before the configuration information adding and sending module 13014 sends the configuration information, send the user equipment a downlink synchronization signal obtained by means of precoding processing or a preset dedicated downlink synchronization signal, to complete downlink synchronization with the user equipment.

It should be noted that the base station 130 in this embodiment of the present invention may further include another conventional function module of a base station in the prior art, and functions of the function modules in the base station 130 may be specifically implemented according to the method in the foregoing method embodiment, and details are not described herein.

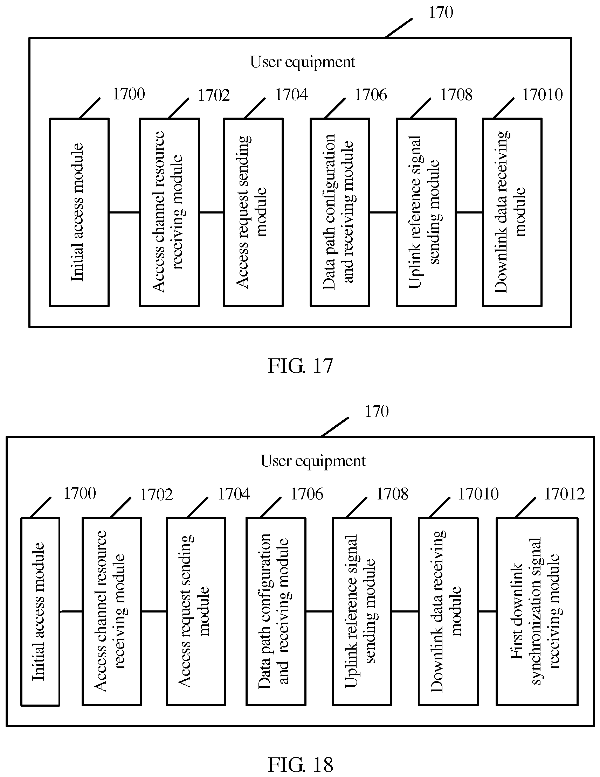

FIG. 17 shows a schematic structural diagram of user equipment according to the present invention. User equipment 170 includes: an initial access module 1700, an access channel resource receiving module 1702, an access request sending module 1704, a data path configuration and receiving module 1706, an uplink reference signal sending module 1708, and a downlink data receiving module 17010.

The initial access module 1700 is adapted to establish initial access to a first base station.

The access channel resource receiving module 1702 is adapted to receive a channel resource that is used for an access request and that is sent by the first base station, where the channel resource for the access request is a channel resource that is used for an access request and that is reserved for the user equipment by negotiating, by the first base station, with a base station corresponding to a user cell.

The access request sending module 1704 is adapted to send an access request to a second base station.

The data path configuration and receiving module 1706 is adapted to receive a path that is for data transmission to a serving cell and that is configured by the first base station for the user equipment, where the serving cell is a user cell that is selected as a serving cell of the user equipment by analyzing and determining, by the first base station, channel quality of the user cell according to access request channel quality information reported by the second base station.

The uplink reference signal sending module 1708 is adapted to send an uplink reference signal to a base station corresponding to the serving cell.

The downlink data receiving module 17010 is adapted to receive data that is obtained by weighting downlink data by means of precoding and that is sent by the base station corresponding to the serving cell.

Specifically, the initial access module 1700 may be further adapted to perform downlink synchronization with the first base station and then perform uplink synchronization, to obtain an uplink timing advance from the user equipment to the first base station.

The access request sending module 1704 is specifically adapted to send the access request to the second base station according to the uplink timing advance.

Further, FIG. 18 shows a schematic structural diagram of another embodiment of user equipment according to the present invention. In addition to the initial access module 1700, the access channel resource receiving module 1702, the access request sending module 1704, the data path configuration and receiving module 1706, the uplink reference signal sending module 1708, and the downlink data receiving module 17010, the user equipment 170 may include: a first downlink synchronization signal receiving module 17012, adapted to: after the uplink reference signal sending module 1708 sends the uplink reference signal to the base station corresponding to the serving cell, receive a downlink synchronization signal that is obtained by means of precoding processing and that is sent by the base station corresponding to the serving cell, to complete downlink synchronization with the second base station; or receive a preset dedicated downlink synchronization signal that is sent by the base station corresponding to the serving cell, to complete downlink synchronization with the second base station.

The downlink data receiving module 17010 may be specifically adapted to receive, according to downlink synchronization with the serving cell, the data that is obtained by weighting the downlink data by means of precoding and that is sent by the base station corresponding to the serving cell.

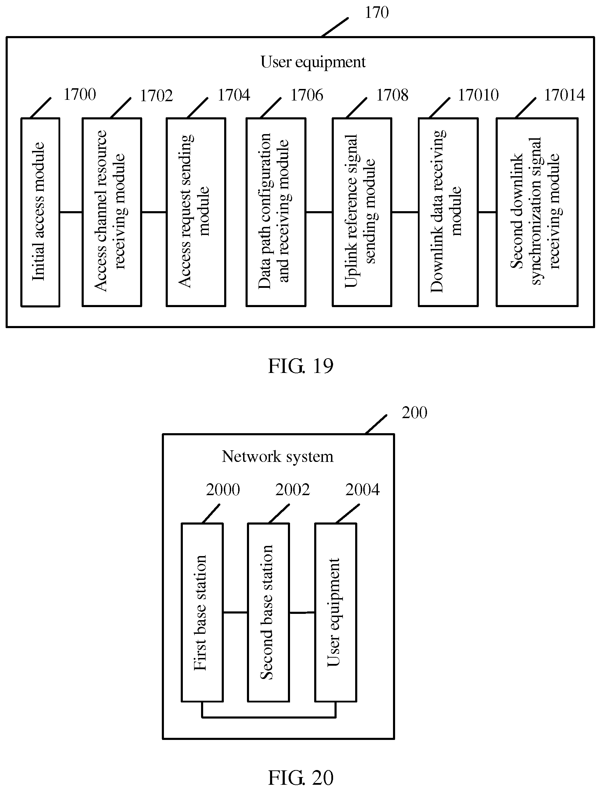

Still further, FIG. 19 shows a schematic structural diagram of another embodiment of user equipment according to the present invention. In addition to the initial access module 1700, the access channel resource receiving module 1702, the access request sending module 1704, the data path configuration and receiving module 1706, the uplink reference signal sending module 1708, and the downlink data receiving module 17010, the user equipment 170 may include: a second downlink synchronization signal receiving module 17014, adapted to: before the data path configuration and receiving module 1706 receives configuration information sent by the first base station, receive a downlink synchronization signal that is obtained by means of precoding processing and that is sent by the base station corresponding to the serving cell, to complete downlink synchronization with the second base station; or receive a preset dedicated downlink synchronization signal that is sent by the base station corresponding to the serving cell, to complete downlink synchronization with the second base station.

The configuration information is forwarded by the base station corresponding to the serving cell and is used for configuring, by the first base station for the user equipment, the path for data transmission to the serving cell.

The downlink data receiving module 17010 may be specifically adapted to receive, according to downlink synchronization with the serving cell, the data that is obtained by weighting the downlink data by means of precoding and that is sent by the base station corresponding to the serving cell.

Still further, the configuration information received by the data path configuration and receiving module 1706 includes an uplink synchronization time amount from the user equipment to the base station corresponding to the serving cell, and the uplink reference signal sending module 1708 is specifically adapted to send, according to the uplink synchronization time amount, the uplink reference signal to the base station corresponding to the serving cell; or
the configuration information received by the data path configuration and receiving module 1706 includes an uplink time difference from the user equipment to the base station corresponding to the serving cell, and the uplink reference signal sending module 1708 is specifically adapted to: subtract the uplink time difference from the uplink timing advance, to obtain an uplink synchronization time amount from the user equipment to the base station corresponding to the serving cell, and send, according to the uplink synchronization time amount, the uplink reference signal to the base station corresponding to the serving cell.

It should be noted that the user equipment 170 in this embodiment of the present invention may further include another conventional function module of UE in the prior art, and functions of the function modules in the user equipment 170 may be specifically implemented according to the method in the foregoing method embodiment, and details are not described herein.

FIG. 20 shows a schematic structural diagram of a network system according to the present invention. A network system 200 includes: a first base station 2000, a second base station 2002, and user equipment 2004.

The first base station 2000 may be the base station 110 in the foregoing embodiment, the second base station 2002 may be the base station 130 in the foregoing embodiment, and the user equipment 2004 may be the user equipment 170 in the foregoing embodiment.

It may be understood that the second base station 2002 is a general name of micro-cell base stations, that is, the second base station 2002 may include multiple micro-cell base stations. Functions of function modules in the first base station 2000, the second base station 2002, and the user equipment 2004 may be specifically implemented according to the methods in the foregoing method embodiments, and details are not described herein.

According to this embodiment of the present invention, a micro-cell base station side measures and analyzes an uplink access request of UE, and reports a measurement result to a macro-cell base station side, which replaces the UE in measuring a downlink signal and performing feedback, thereby completing micro cell selection and access for the user equipment, resolving cell selection and access technical problems in the prior art caused after a massive MIMO technology is introduced to a micro cell, and improving a hotspot capacity by using an advantage of the massive MIMO technology in a wireless access system as well as reducing a power amplifier level.

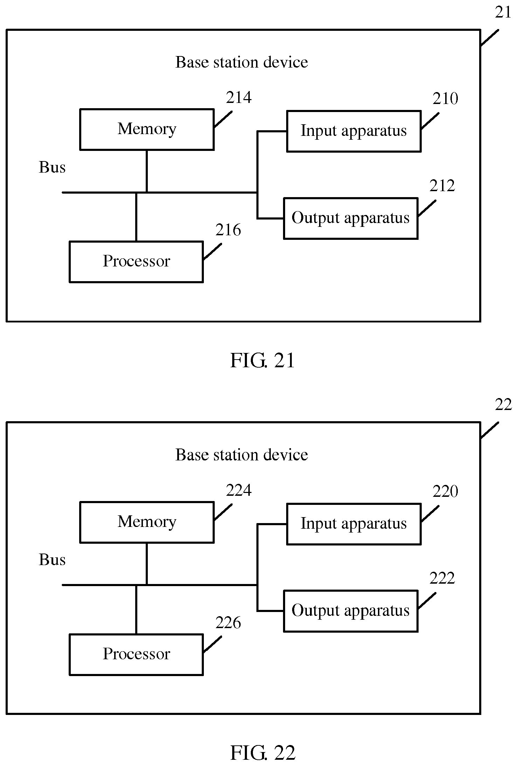

To better implement the foregoing solutions in the embodiments of the present invention, the following describes an implementation manner of an apparatus corresponding to the foregoing method with reference to a schematic structural diagram, shown in FIG. 21, of a base station device provided in an embodiment of the present invention. A base station device 21 includes: an input apparatus 210, an output apparatus 212, a memory 214, and a processor 216 (where there may be one or more processors 216 in the base station device 21, and FIG. 21 uses one processor as an example). In some embodiments of the present invention, the input apparatus 210, the output apparatus 212, the memory 214, and the processor 216 may be connected by using a bus or in another manner, and being connected by using a bus is used as an example in FIG. 21.

The memory 214 is adapted to store program code, and the processor 216 is adapted to invoke the program code stored in the memory, so as to perform the following steps:
after establishing initial access to user equipment, negotiating with a base station corresponding to a user cell to reserve, for the user equipment, a channel resource used for an access request, and sending, by using the output apparatus 212, the user equipment the channel resource used for an access request; receiving, by using the input apparatus 210, access request channel quality information reported by the base station corresponding to the user cell, where the access request channel quality information is access request channel quality information obtained by performing, by the base station corresponding to the user cell, channel quality analysis and measurement according to a received access request sent by the user equipment; analyzing and determining channel quality of the user cell according to the access request channel quality information, to select a user cell as a serving cell of the user equipment; and configuring, for the user equipment by using the output apparatus 212, a path for data transmission to the serving cell.

Specifically, the base station device 210 is a first base station device, and the base station corresponding to the user cell is a second base station device, and the establishing, by the processor 216, initial access to user equipment includes:
performing downlink synchronization with the user equipment and then performing uplink synchronization, to obtain an uplink timing advance from the user equipment to the first base station device, and sending the uplink timing advance to the user equipment by using the output apparatus 212.

Further, the configuring, by the processor 216 for the user equipment by using the output apparatus 212, a path for data transmission to the serving cell includes:
sending configuration information that includes the uplink timing advance to the second base station device by using the output apparatus 212, where the configuration information is used to configure, for the user equipment, the path for data transmission to the serving cell.

Still further, the access request channel quality information includes an uplink time difference from the user equipment to the second base station device, and the uplink time difference is a time difference obtained by performing, by the second base station device, a subtractive operation on an expected arrival time at which the access request sent by the user equipment is to be received and an actual arrival time at which the access request sent by the user equipment is received.

The configuring, by the processor 216 for the user equipment by using the output apparatus 212, a path for data transmission to the serving cell includes:
subtracting the uplink time difference from the uplink timing advance, to obtain an uplink synchronization time amount from the user equipment to a base station corresponding to the serving cell; and sending configuration information that includes the uplink synchronization time amount to the user equipment by using the output apparatus 212, where the configuration information is used to configure, for the user equipment, the path for data transmission to the serving cell.

It may be understood that the base station device 21 may further include another conventional function module of a base station in the prior art. For functions of the modules in the base station device 21, reference may be correspondingly made to specific implementation manners in the foregoing method embodiments, and details are not described herein.

FIG. 22 shows a schematic structural diagram of another embodiment of a base station device according to the present invention. A base station device 22 includes: an input apparatus 220, an output apparatus 222, a memory 224, and a processor 226 (where there may be one or more processors 226 in the base station device 22, and FIG. 22 uses one processor as an example.) In some embodiments of the present invention, the input apparatus 220, the output apparatus 222, the memory 224, and the processor 226 may be connected by using a bus or in another manner, and being connected by using a bus is used as an example in FIG. 22.

The memory 224 is adapted to store program code, and the processor 226 is adapted to invoke the program code stored in the memory, so as to perform the following steps:
negotiating with a first base station device to reserve, for user equipment, a channel resource used for an access request; receiving, by using the input apparatus 220, an access request sent by the user equipment; performing channel quality analysis and measurement according to the access request to obtain access request channel quality information, and sending the access request channel quality information to the first base station device by using the output apparatus 222; receiving, by using the input apparatus 220, an uplink reference signal sent by the user equipment; and weighting downlink data by means of precoding, and then sending weighted downlink data to the user equipment by using the output apparatus 222.

Specifically, the performing, by the processor 226, channel quality analysis and measurement according to the access request to obtain access request channel quality information, and sending the access request channel quality information to the first base station device by using the output apparatus 222 includes:
performing a subtractive operation on an expected arrival time at which the access request sent by the user equipment is to be received and an actual arrival time at which the access request sent by the user equipment is received, to obtain an uplink time difference from the user equipment to the second base station device; performing channel quality analysis and measurement according to the access request to obtain the access request channel quality information; and adding the uplink time difference to the access request information quality information, and then sending the access request channel quality information to the first base station by using the output apparatus 222.

Further, the processor 226 further performs the following:
performing a subtractive operation on an expected arrival time at which the access request sent by the user equipment is to be received and an actual arrival time at which the access request sent by the user equipment is received, to obtain an uplink time difference from the user equipment to the second base station device; receiving configuration information that includes an uplink timing advance and that is sent by the first base station device, where the configuration information is used to configure, for the user equipment, a path for data transmission to the serving cell, and the uplink timing advance is an uplink timing advance that is from the user equipment to the first base station device and that is obtained by performing, by the first base station device, downlink synchronization with the user equipment and then performing uplink synchronization; and adding, to the configuration information, the uplink time difference from the user equipment to the second base station device, and sending the configuration information to the user equipment by using the output apparatus 222.

Still further, the processor 226 further performs the following:
performing a subtractive operation on an expected arrival time at which the access request sent by the user equipment is to be received and an actual arrival time at which the access request sent by the user equipment is received, to obtain an uplink time difference from the user equipment to the second base station device; receiving configuration information that includes an uplink timing advance and that is sent by the first base station device, where the configuration information is used to configure, for the user equipment, a path for data transmission to the serving cell, and the uplink timing advance is an uplink timing advance that is from the user equipment to the first base station device and that is obtained by performing, by the first base station device, downlink synchronization with the user equipment and then performing uplink synchronization; subtracting the uplink time difference from the uplink timing advance, to obtain an uplink synchronization time amount from the user equipment to a base station corresponding to the serving cell; and sending configuration information that includes the uplink synchronization time amount to the user equipment by using the output apparatus 222, where the configuration information is used to configure, for the user equipment, the path for data transmission to the serving cell.

Still further, the processor 226 further performs the following:
after the receiving, by using the input apparatus, an uplink reference signal sent by the user equipment, sending the user equipment a downlink synchronization signal obtained by means of precoding processing or a preset dedicated downlink synchronization signal, to complete downlink synchronization with the user equipment.

Still further, the processor 226 further performs the following:
after receiving the configuration information by using the input apparatus, and before the sending the configuration information to the user equipment by using the output apparatus 222, sending the user equipment a downlink synchronization signal obtained by means of precoding processing or a preset dedicated downlink synchronization signal, to complete downlink synchronization with the user equipment.

It may be understood that the base station device 22 may further include another conventional function module of a base station in the prior art. For functions of the modules in the base station device 22, reference may be correspondingly made to specific implementation manners in the foregoing method embodiments, and details are not described herein.

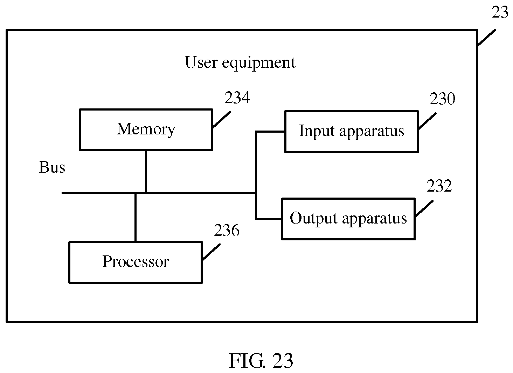

FIG. 23 shows a schematic structural diagram of another embodiment of user equipment according to the present invention. User equipment 23 includes: an input apparatus 230, an output apparatus 232, a memory 234, and a processor 236 (where there may be one or more processors 236 in the user equipment 23, and one processor is used as an example in FIG. 23). In some embodiments of the present invention, the input apparatus 230, the output apparatus 232, the memory 234, and the processor 236 may be connected by using a bus or in another manner, and being connected by using a bus is used as an example in FIG. 23.

The memory 234 is adapted to store program code, and the processor 236 is adapted to invoke the program code stored in the memory, so as to perform the following steps:
establishing initial access to a first base station; receiving, by using the input apparatus 230, a channel resource that is used for an access request and that is sent by the first base station, where the channel resource for the access request is a channel resource that is used for an access request and that is reserved for the user equipment by negotiating, by the first base station, with a base station corresponding to a user cell; sending an access request to a second base station by using the output apparatus 232; receiving, by using the input apparatus, a path that is for data transmission to a serving cell and that is configured by the first base station for the user equipment, where the serving cell is a user cell that is selected as a serving cell of the user equipment by analyzing and determining, by the first base station, channel quality of the user cell according to access request channel quality information reported by the second base station; sending, by using the output apparatus 232, an uplink reference signal to a base station corresponding to the serving cell; and receiving, by using the input apparatus 230, data that is obtained by weighting downlink data by means of precoding and that is sent by the base station corresponding to the serving cell.

Specifically, the establishing, by the processor 236, initial access to a first base station includes: performing downlink synchronization with the first base station and then performing uplink synchronization, to obtain an uplink timing advance from the user equipment to the first base station.

The sending, by the processor 236 an access request to a second base station by using the output apparatus 232 includes: sending the access request to the second base station according to the uplink timing advance by using the input apparatus.

Further, the processor 236 further performs the following:
after the sending, by using the output apparatus 232, an uplink reference signal to a base station corresponding to the serving cell, receiving, by using the input apparatus 230, a downlink synchronization signal that is obtained by means of precoding processing and that is sent by the base station corresponding to the serving cell, to complete downlink synchronization with the second base station; or receiving, by using the input apparatus 230, a preset dedicated downlink synchronization signal that is sent by the base station corresponding to the serving cell, to complete downlink synchronization with the second base station.

The receiving, by the processor 236 by using the input apparatus 230, data that is obtained by weighting downlink data by means of precoding and that is sent by the base station corresponding to the serving cell includes: receiving, by using the input apparatus 230 according to downlink synchronization with the serving cell, the data that is obtained by weighting the downlink data by means of precoding and that is sent by the base station corresponding to the serving cell.

Still further, the processor 236 further performs the following:
before receiving, by using the input apparatus 230, configuration information sent by the first base station, receiving, by using the input apparatus 230, a downlink synchronization signal that is obtained by means of precoding processing and that is sent by the base station corresponding to the serving cell, to complete downlink synchronization with the second base station; or receiving, by using the input apparatus 230, a preset dedicated downlink synchronization signal that is sent by the base station corresponding to the serving cell, to complete downlink synchronization with the second base station.

The configuration information is forwarded by the base station corresponding to the serving cell and is used for configuring, by the first base station for the user equipment, the path for data transmission to the serving cell.

The receiving, by the processor 236 by using the input apparatus 230, data that is obtained by weighting downlink data by means of precoding and that is sent by the base station corresponding to the serving cell includes: receiving, by using the input apparatus 230 according to downlink synchronization with the serving cell, the data that is obtained by weighting the downlink data by means of precoding and that is sent by the base station corresponding to the serving cell.

Still further, the configuration information received by the user equipment includes an uplink synchronization time amount from the user equipment to the base station corresponding to the serving cell, and the sending, by the processor 236 by using the output apparatus 232, an uplink reference signal to a base station corresponding to the serving cell specifically includes: sending, by using the output apparatus 232 according to the uplink synchronization time amount, the uplink reference signal to the base station corresponding to the serving cell; or
the configuration information received by the user equipment includes an uplink time difference from the user equipment to the base station corresponding to the serving cell, and the sending, by the processor 236 by using the output apparatus 232, an uplink reference signal to a base station corresponding to the serving cell specifically includes: subtracting the uplink time difference from the uplink timing advance, to obtain an uplink synchronization time amount from the user equipment to the base station corresponding to the serving cell, and sending, according to the uplink synchronization time amount by using the output apparatus 232, the uplink reference signal to the base station corresponding to the serving cell.

It may be understood that the user equipment 23 may further include another conventional function module of user equipment in the prior art, and the user equipment 23 includes but is not limited to another electronic device such as a mobile terminal, a tablet computer, or a personal digital assistant. For functions of the modules in the user equipment 23, reference may be correspondingly made to specific implementation manners in the foregoing method embodiments, and details are not described herein.

Still further, the present invention further discloses a network system, and the network system includes: a first base station device, a second base station device, and user equipment.

The first base station device may be the base station device 21 in the foregoing embodiment.

The second base station device may be the base station device 22 in the foregoing embodiment.

The user equipment may be the user equipment 23 in the foregoing embodiment.

It may be understood that the network system in this embodiment of the present invention may further include a device such as a server or a service center.

In conclusion, according to this embodiment of the present invention, a micro-cell base station side measures and analyzes an uplink access request of UE, and reports a measurement result to a macro-cell base station side, which replaces the UE in measuring a downlink signal and performing feedback, thereby completing micro cell selection and access for the user equipment, resolving cell selection and access technical problems in the prior art caused after a massive MIMO technology is introduced to a micro cell, and improving a hotspot capacity by using an advantage of the massive MIMO technology in a wireless access system as well as reducing a power amplifier level.

A person of ordinary skill in the art may understand that all or some of the procedures of the methods in the foregoing embodiments may be implemented by a computer program instructing relevant hardware. The program may be stored in a computer readable storage medium. When the program runs, the procedures of the foregoing method embodiments are performed. The storage medium may be: a magnetic disk, an optical disc, a read-only memory (Read-Only Memory, ROM), a random access memory (Random Access Memory, RAM), or the like.

What is disclosed above is merely exemplary embodiments of the present invention, and certainly is not intended to limit the protection scope of the present invention. A person of ordinary skill in the art may understand that all or some of procedures that implement the foregoing embodiments and equivalent modifications made in accordance with the claims of the present invention shall fall within the scope of the present invention.

## Claims

1. Abase station, comprising:
an initial access establishment module (1100), adapted to establish initial access to user equipment;
**characterized by** the base station further comprising:
a channel resource negotiation module (1102), adapted to: negotiate with a second base station corresponding to a user cell to reserve, for the user equipment, a channel resource used for an access request, and send the user equipment the channel resource used for an access request;
a channel quality receiving module (1104), adapted to receive access request channel quality information reported by the second base station corresponding to the user cell, wherein the access request channel quality information is access request channel quality information obtained by performing, by the second base station corresponding to the user cell, channel quality analysis and measurement according to a received access request sent by the user equipment;
a serving cell determining module (1106), adapted to analyze and determine channel quality of the user cell according to the access request channel quality information, to select a user cell as a serving cell of the user equipment; and
a data path configuration module (1108), adapted to configure, for the user equipment, a path for data transmission to the serving cell;
wherein the first base station is a base station in a macro cell, the user cell is a micro cell in the coverage of the macro cell or is selected by the macro cell according to location information of a user, and the second base station is a base station in the micro cell.

2. The base station according to claim 1, wherein the base station is a first base station, and the base station corresponding to the user cell is a second base station; and
the initial access establishment module is further adapted to: perform downlink synchronization with the user equipment and then perform uplink synchronization, to obtain an uplink timing advance from the user equipment to the first base station, and send the uplink timing advance to the user equipment.

3. The base station according to claim 2, wherein the data path configuration module is specifically adapted to send configuration information that comprises the uplink timing advance to the second base station, wherein the configuration information is used to configure, for the user equipment, the path for data transmission to the serving cell.

4. The base station according to claim 2, wherein the access request channel quality information comprises an uplink time difference from the user equipment to the second base station, and the uplink time difference is a time difference obtained by performing, by the second base station, a subtractive operation on an expected arrival time at which the access request sent by the user equipment is to be received and an actual arrival time at which the access request sent by the user equipment is received; and
the data path configuration module comprises:
an uplink synchronization unit (11080), adapted to subtract the uplink time difference from the uplink timing advance, to obtain an uplink synchronization time amount from the user equipment to a base station corresponding to the serving cell; and
a configuration sending unit (11082), adapted to send configuration information that comprises the uplink synchronization time amount to the user equipment, wherein the configuration information is used to configure, for the user equipment, the path for data transmission to the serving cell.

5. A base station, wherein the base station is a second base station, **characterized in that** the second base station comprises:
a resource negotiation and reservation module (1300), adapted to negotiate with a first base station to reserve, for user equipment, a channel resource used for an access request;
an access request receiving module (1302), adapted to receive an access request sent by the user equipment;
a channel quality analysis and sending module (1304), adapted to: perform channel quality analysis and measurement according to the access request to obtain access request channel quality information, and send the access request channel quality information to the first base station;
a reference signal receiving module (1306), adapted to receive an uplink reference signal sent by the user equipment; and
a downlink data sending module (1308), adapted to: weight downlink data by means of precoding, and then send the weighted downlink data to the user equipment;
wherein the first base station is a base station in a macro cell, the second base station is a base station in a micro cell, and the micro cell is in the coverage of the macro cell or is selected by the macro cell according to location information of a user.

6. The base station according to claim 5, wherein the channel quality analysis and sending module comprises:
a time difference calculation unit (13040), adapted to perform a subtractive operation on an expected arrival time at which the access request sent by the user equipment is to be received and an actual arrival time at which the access request sent by the user equipment is received, to obtain an uplink time difference from the user equipment to the second base station;
a channel quality information generation unit (13042), adapted to perform channel quality analysis and measurement according to the access request to obtain the access request channel quality information; and
a channel quality information sending unit (13044), adapted to: add the uplink time difference to the access request information quality information, and then send the access request channel quality information to the first base station.

7. The base station according to claim 5, wherein the second base station further comprises:
a first time difference generation module (13010), adapted to perform a subtractive operation on an expected arrival time at which the access request sent by the user equipment is to be received and an actual arrival time at which the access request sent by the user equipment is received, to obtain an uplink time difference from the user equipment to the second base station;
a first configuration information receiving module (13012), adapted to receive configuration information that comprises an uplink timing advance and that is sent by the first base station, wherein the configuration information is used to configure, for the user equipment, a path for data transmission to a serving cell, and the uplink timing advance is an uplink timing advance that is from the user equipment to the first base station and that is obtained by performing, by the first base station, downlink synchronization with the user equipment and then performing uplink synchronization; and
a configuration information adding and sending module (13014), adapted to: add, to the configuration information, the uplink time difference from the user equipment to the second base station, and send the configuration information to the user equipment.

8. The base station according to claim 5, wherein the second base station further comprises:
a second time difference generation module (13016), adapted to perform a subtractive operation on an expected arrival time at which the access request sent by the user equipment is to be received and an actual arrival time at which the access request sent by the user equipment is received, to obtain an uplink time difference from the user equipment to the second base station;
a second configuration information receiving module (13018), adapted to receive configuration information that comprises an uplink timing advance and that is sent by the first base station, wherein the configuration information is used to configure, for the user equipment, a path for data transmission to the serving cell, and the uplink timing advance is an uplink timing advance that is from the user equipment to the first base station and that is obtained by performing, by the first base station, downlink synchronization with the user equipment and then performing uplink synchronization;
an uplink synchronization calculation module (13020), adapted to subtract the uplink time difference from the uplink timing advance, to obtain an uplink synchronization time amount from the user equipment to a base station corresponding to the serving cell; and
an adding and sending module (13022), adapted to send configuration information that comprises the uplink synchronization time amount to the user equipment, wherein the configuration information is used to configure, for the user equipment, the path for data transmission to the serving cell.

9. The base station according to claim 5 or 6, wherein the second base station further comprises:
a first downlink synchronization module, adapted to: after the reference signal receiving module receives the uplink reference signal sent by the user equipment, send the user equipment a downlink synchronization signal obtained by means of precoding processing or a preset dedicated downlink synchronization signal, to complete downlink synchronization with the user equipment.

10. The base station according to claim 7 or 8, wherein the second base station further comprises:
a second downlink synchronization module, adapted to: after the configuration information receiving module receives the configuration information, and before the configuration information adding and sending module sends the configuration information, send the user equipment a downlink synchronization signal obtained by means of precoding processing or a preset dedicated downlink synchronization signal, to complete downlink synchronization with the user equipment.

11. User equipment, comprising:
an initial access module (1700), adapted to establish initial access to a first base station;
**characterized in that** the user equipment further comprises:
an access channel resource receiving module (1702), adapted to receive a channel resource that is used for an access request and that is sent by the first base station, wherein the channel resource for an access request is a channel resource that is used for an access request and that is reserved for the user equipment by negotiating, by the first base station, with a base station corresponding to a user cell;
an access request sending module (1704), adapted to send an access request to a second base station;
a data path configuration and receiving module (1706), adapted to receive a path that is for data transmission to a serving cell and that is configured by the first base station for the user equipment, wherein the serving cell is a user cell that is selected as a serving cell of the user equipment by analyzing and determining, by the first base station, channel quality of the user cell according to access request channel quality information reported by the second base station;
an uplink reference signal sending module (1708), adapted to send an uplink reference signal to a base station corresponding to the serving cell; and
a downlink data receiving module (17010), adapted to receive data that is obtained by weighting downlink data by means of precoding and that is sent by the base station corresponding to the serving cell;
wherein the first base station is a base station in a macro cell, the user cell is a micro cell in the coverage of the macro cell or is selected by the macro cell according to location information of a user, and the second base station is a base station in the micro cell.

12. The user equipment according to claim 11, wherein the initial access module is further adapted to perform downlink synchronization with the first base station and then perform uplink synchronization, to obtain an uplink timing advance from the user equipment to the first base station; and
the access request sending module is specifically adapted to send the access request to the second base station according to the uplink timing advance.

13. The user equipment according to claim 11 or 12, wherein the user equipment further comprises:
a first downlink synchronization signal receiving module (17012), adapted to: after the uplink reference signal sending module sends the uplink reference signal to the base station corresponding to the serving cell, receive a downlink synchronization signal that is obtained by means of precoding processing and that is sent by the base station corresponding to the serving cell, to complete downlink synchronization with the second base station; or receive a preset dedicated downlink synchronization signal that is sent by the base station corresponding to the serving cell, to complete downlink synchronization with the second base station; and
the downlink data receiving module is specifically adapted to receive, according to downlink synchronization with the serving cell, the data that is obtained by weighting the downlink data by means of precoding and that is sent by the base station corresponding to the serving cell.

14. The user equipment according to claim 11 or 12, wherein the user equipment further comprises:
a second downlink synchronization signal receiving module (17014), adapted to: before the data path configuration and receiving module receives configuration information sent by the first base station, receive a downlink synchronization signal that is obtained by means of precoding processing and that is sent by the base station corresponding to the serving cell, to complete downlink synchronization with the second base station; or receive a preset dedicated downlink synchronization signal that is sent by the base station corresponding to the serving cell, to complete downlink synchronization with the second base station, wherein
the configuration information is forwarded by the base station corresponding to the serving cell and is used for configuring, by the first base station for the user equipment, the path for data transmission to the serving cell; and
the downlink data receiving module is specifically adapted to receive, according to downlink synchronization with the serving cell, the data that is obtained by weighting the downlink data by means of precoding and that is sent by the base station corresponding to the serving cell.

15. The user equipment according to any one of claims 12 to 14, wherein the configuration information received by the data path configuration and receiving module comprises an uplink synchronization time amount from the user equipment to the base station corresponding to the serving cell, and the uplink reference signal sending module is specifically adapted to send, according to the uplink synchronization time amount, the uplink reference signal to the base station corresponding to the serving cell; or
the configuration information received by the data path configuration and receiving module comprises an uplink time difference from the user equipment to the base station corresponding to the serving cell, and the uplink reference signal sending module is specifically adapted to: subtract the uplink time difference from the uplink timing advance, to obtain an uplink synchronization time amount from the user equipment to the base station corresponding to the serving cell, and send, according to the uplink synchronization time amount, the uplink reference signal to the base station corresponding to the serving cell.

16. A cell access method, comprising:
establishing (S300), by a first base station, initial access to user equipment;
**characterized by** the method further comprising:
negotiating (S302), by the first base station, with a second base station corresponding to a user cell to reserve, for the user equipment, a channel resource used for an access request, and sending the user equipment the channel resource used for an access request;
receiving (S312), by the first base station, access request channel quality information reported by the second base station corresponding to the user cell, wherein the access request channel quality information is access request channel quality information obtained by performing, by the second base station corresponding to the user cell, channel quality analysis and measurement according to a received access request sent by the user equipment;
analyzing and determining (S314), by the first base station, channel quality of the user cell according to the access request channel quality information, to select a user cell as a serving cell of the user equipment; and
configuring (S316), by the first base station for the user equipment, a path for data transmission to the serving cell;
wherein the first base station is a base station in a macro cell, the user cell is a micro cell in the coverage of the macro cell or is selected by the macro cell according to location information of a user, and the second base station is a base station in the micro cell.

17. A cell access method, **characterized by** the method comprising:
negotiating (S302), by a second base station, with a first base station to reserve, for user equipment, a channel resource used for an access request;
receiving (S306), by the second base station, an access request sent by the user equipment;
performing (S308), by the second base station, channel quality analysis and measurement according to the access request to obtain access request channel quality information, and sending the access request channel quality information to the first base station;
receiving (S318), by the second base station, an uplink reference signal sent by the user equipment; and
weighting (S320), by the second base station, downlink data by means of precoding, and then sending weighted downlink data to the user equipment;
wherein the first base station is a base station in a macro cell, the second base station is a base station in a micro cell, and the micro cell is in the coverage of the macro cell or is selected by the macro cell according to location information of a user.

18. A cell access method, comprising:
establishing (S300), by user equipment, initial access to a first base station;
**characterized by** the method further comprising:
receiving (S304), by the user equipment, a channel resource that is used for an access request and that is sent by the first base station, wherein the channel resource for an access request is a channel resource that is used for an access request and that is reserved for the user equipment by negotiating, by the first base station, with a base station corresponding to a user cell;
sending (S306), by the user equipment, an access request to a second base station;
receiving (S316), by the user equipment, a path that is for data transmission to a serving cell and that is configured by the first base station for the user equipment, wherein the serving cell is a user cell that is selected as a serving cell of the user equipment by analyzing and determining, by the first base station, channel quality of the user cell according to access request channel quality information reported by the second base station;
sending (S318), by the user equipment, an uplink reference signal to a base station corresponding to the serving cell; and
receiving (S320), by the user equipment, data that is obtained by weighting downlink data by means of precoding and that is sent by the base station corresponding to the serving cell;
wherein the first base station is a base station in a macro cell, the user cell is a micro cell in the coverage of the macro cell or is selected by the macro cell according to location information of a user, and the second base station is a base station in the micro cell.

## Patentansprüche

1. Basisstation, umfassend:
ein Erstzugangsherstellungsmodul (1100), das ausgelegt ist zum Herstellen eines Erstzugangs zu einem Benutzergerät;
**dadurch gekennzeichnet, dass** die Basisstation ferner Folgendes umfasst:
ein Kanalressourcenaushandlungsmodul (1102), das ausgelegt ist zum: Aushandeln mit einer zweiten, einer Benutzerzelle entsprechenden Basisstation zum Reservieren, für das Benutzergerät, einer für eine Zugangsanforderung verwendeten Kanalressource und Senden an das Benutzergerät der für eine Zugangsanforderung verwendeten Kanalressource;
ein Kanalqualitätsempfangsmodul (1104), das ausgelegt ist zum Empfangen von durch die zweite Basisstation gemeldeten, der Benutzerzelle entsprechenden Zugangsanforderungskanalqualitätsinformationen, wobei die Zugangsanforderungskanalqualitätsinformationen
Zugangsanforderungskanalqualitätsinformationen sind, die erhalten werden durch Durchführen, durch die der Benutzerzelle entsprechenden zweiten Basisstation, von Kanalqualitätsanalyse und -messung gemäß einer durch das Benutzergerät gesendeten empfangenen Zugangsanforderung;
ein Dienstzellenbestimmungsmodul (1106), das ausgelegt ist zum Analysieren und Bestimmen von Kanalqualität der Benutzerzelle gemäß den Zugangsanforderungskanalqualitätsinformationen, um eine Benutzerzelle als eine Dienstzelle des Benutzergeräts auszuwählen; und
ein Datenpfadkonfigurationsmodul (1108), das ausgelegt ist zum Konfigurieren, für das Benutzergerät, eines Pfads für Datenübertragung an die Dienstzelle;
wobei die erste Basisstation eine Basisstation in einer Makrozelle ist, die Benutzerzelle eine Mikrozelle in der Überdeckung der Makrozelle ist oder durch die Makrozelle gemäß Standortinformationen eines Benutzers ausgewählt ist und die zweite Basisstation eine Basisstation in der Mikrozelle ist.

2. Basisstation nach Anspruch 1, wobei die Basisstation eine erste Basisstation ist und die der Benutzerzelle entsprechende Basisstation eine zweite Basisstation ist; und das Erstzugangsherstellungsmodul ferner ausgelegt ist zum: Durchführen von Downlink-Synchronisation mit dem Benutzergerät und dann Durchführen von Uplink-Synchronisation, um einen Uplink-Timing-Vorlauf von dem Benutzergerät zu der ersten Basisstation zu erhalten, und Senden des Uplink-Timing-Vorlaufs an das Benutzergerät.

3. Basisstation nach Anspruch 2, wobei das Datenpfadkonfigurationsmodul insbesondere ausgelegt ist zum Senden von Konfigurationsinformationen, die den Uplink-Timing-Vorlauf umfassen, an die zweite Basisstation, wobei die Konfigurationsinformationen verwendet werden zum Konfigurieren, für das Benutzergerät, des Pfades für Datenübertragung an die Dienstzelle.

4. Basisstation nach Anspruch 2, wobei die Zugangsanforderungskanalqualitätsinformationen eine Uplink-Zeitdifferenz von dem Benutzergerät zu der zweiten Basisstation umfassen und die Uplink-Zeitdifferenz eine Zeitdifferenz ist, die erhalten wird durch Durchführen, durch die zweite Basisstation, einer Subtraktivoperation an einer erwarteten Ankunftszeit, zu welcher die durch das Benutzergerät gesendete Zugangsanforderung empfangen werden soll, und einer tatsächlichen Ankunftszeit, zu welcher die durch das Benutzergerät gesendete Zugangsanforderung empfangen wird; und
das Datenpfadkonfigurationsmodul Folgendes umfasst:
eine Uplink-Synchronisationseinheit (11080), die ausgelegt ist zum Subtrahieren der Uplink-Zeitdifferenz vom Uplink-Timing-Vorlauf, um einen Uplink-Synchronisationszeitbetrag von dem Benutzergerät zu einer der Dienstzelle entsprechenden Basisstation zu erhalten; und
eine Konfigurationssendeeinheit (11082), die ausgelegt ist zum Senden von Konfigurationsinformationen, die den Uplink-Synchronisationszeitbetrag umfassen, an das Benutzergerät, wobei die Konfigurationsinformationen verwendet werden zum Konfigurieren, für das Benutzergerät, des Pfades für Datenübertragung zu der Dienstzelle.

5. Basisstation, wobei die Basisstation eine zweite Basisstation ist, **dadurch gekennzeichnet, dass** die zweite Basisstation Folgendes umfasst:
ein Ressourcenaushandlungs- und Reservationsmodul (1300), das ausgelegt ist zum Aushandeln mit einer ersten Basisstation zum Reservieren, für ein Benutzergerät, einer für eine Zugangsanforderung verwendeten Kanalressource;
ein Zugangsanforderungsempfangsmodul (1302), das ausgelegt ist zum Empfangen einer durch das Benutzergerät gesendeten Zugangsanforderung;
ein Kanalqualitätsanalyse- und Sendemodul (1304), das ausgelegt ist zum:
Durchführen von Kanalqualitätsanalyse und -messung gemäß der Zugangsanforderung, um Zugangsanforderungskanalqualitätsinformationen zu erhalten und Senden der Zugangsanforderungskanalqualitätsinformationen an die erste Basisstation;
ein Referenzsignalempfangsmodul (1306), das ausgelegt ist zum Empfangen eines durch das Benutzergerät gesendeten Uplink-Referenzsignals; und
ein Downlink-Datensendemodul (1308), das ausgelegt ist zum: Gewichten von Downlink-Daten durch Mittel des Präcodierens und dann Senden der gewichteten Downlink-Daten an das Benutzergerät;
wobei die erste Basisstation eine Basisstation in einer Makrozelle ist, die zweite Basisstation eine Basisstation in einer Mikrozelle ist und die Mikrozelle in der Überdeckung der Makrozelle ist oder durch die Makrozelle gemäß Standortinformationen eines Benutzers ausgewählt ist.

6. Basisstation nach Anspruch 5, wobei das Kanalqualitätsanalyse- und Sendemodul Folgendes umfasst:
eine Zeitdifferenzberechnungseinheit (13040), die ausgelegt ist zum Durchführen einer Subtraktivoperation an einer erwarteten Ankunftszeit, zu welcher die durch das Benutzergerät gesendete Zugangsanforderung empfangen werden soll, und einer tatsächlichen Ankunftszeit, zu welcher die durch das Benutzergerät gesendete Zugangsanforderung empfangen wird, um eine Uplink-Zeitdifferenz von dem Benutzergerät zu der zweiten Basisstation zu erhalten;
eine Kanalqualitätsinformationenerzeugungseinheit (13042), die ausgelegt ist zum Durchführen von Kanalqualitätsanalyse und -messung gemäß der Zugangsanforderung, um Zugangsanforderungskanalqualitätsinformationen zu erhalten; und
eine Kanalqualitätsinformationensendeeinheit (13044), die ausgelegt ist zum: Addieren der Uplink-Zeitdifferenz zu den Zugangsanforderungsinformationenqualitätsinformationen und dann Senden der Zugangsanforderungskanalqualitätsinformationen an die erste Basisstation.

7. Basisstation nach Anspruch 5, wobei die zweite Basisstation ferner Folgendes umfasst:
ein erstes Zeitdifferenzerzeugungsmodul (13010), das ausgelegt ist zum Durchführen einer Subtraktivoperation an einer erwarteten Ankunftszeit, zu welcher die durch das Benutzergerät gesendete Zugangsanforderung empfangen werden soll, und einer tatsächlichen Ankunftszeit, zu welcher die durch das Benutzergerät gesendete Zugangsanforderung empfangen wird, um eine Uplink-Zeitdifferenz von dem Benutzergerät zu der zweiten Basisstation zu erhalten;
ein erstes Konfigurationsinformationenempfangsmodul (13012), das ausgelegt ist zum Empfangen von Konfigurationsinformationen, die einen Uplink-Timing-Vorlauf umfassen und die durch die erste Basisstation gesendet wurden, wobei die Konfigurationsinformationen verwendet werden zum Konfigurieren, für das Benutzergerät, eines Pfades für Datenübertragung zu einer Dienstzelle und der Uplink-Timing-Vorlauf ein Uplink-Timing-Vorlauf ist, der von dem Benutzergerät zu der ersten Basisstation besteht und der erhalten wird durch Durchführen, durch die erste Basisstation, von Downlink-Synchronisation mit dem Benutzergerät und dann Durchführen von Uplink-Synchronisation; und
ein Konfigurationsinformationenaddier- und -sendemodul (13014), das ausgelegt ist zum: Addieren, zu den Konfigurationsinformationen, der Uplink-Zeitdifferenz von dem Benutzergerät zu der zweiten Basisstation und Senden der Konfigurationsinformationen an das Benutzergerät.

8. Basisstation nach Anspruch 5, wobei die zweite Basisstation ferner Folgendes umfasst:
ein zweites Zeitdifferenzerzeugungsmodul (13016), das ausgelegt ist zum Durchführen einer Subtraktivoperation an einer erwarteten Ankunftszeit, zu welcher die durch das Benutzergerät gesendete Zugangsanforderung empfangen werden soll, und einer tatsächlichen Ankunftszeit, zu welcher die durch das Benutzergerät gesendete Zugangsanforderung empfangen wird, um eine Uplink-Zeitdifferenz von dem Benutzergerät zu der zweiten Basisstation zu erhalten;
ein zweites Konfigurationsinformationenempfangsmodul (13018), das ausgelegt ist zum Empfangen von Konfigurationsinformationen, die einen Uplink-Timing-Vorlauf umfassen und die durch die erste Basisstation gesendet wurden, wobei die Konfigurationsinformationen verwendet werden zum Konfigurieren, für das Benutzergerät, eines Pfades für Datenübertragung zu der Dienstzelle und der Uplink-Timing-Vorlauf ein Uplink-Timing-Vorlauf ist, der von dem Benutzergerät zu der ersten Basisstation besteht und der erhalten wird durch Durchführen, durch die erste Basisstation, von Downlink-Synchronisation mit dem Benutzergerät und dann Durchführen von Uplink-Synchronisation;
ein Uplink-Synchronisationsberechnungsmodul (13020), das ausgelegt ist zum Subtrahieren der Uplink-Zeitdifferenz von dem Uplink-Timing-Vorlauf, um einen Uplink-Synchronisationszeitbetrag von dem Benutzergerät zu einer der Dienstzelle entsprechenden Basisstation zu erhalten; und
ein Addier- und Sendemodul (13022), das ausgelegt ist zum Senden von Konfigurationsinformationen, die den Uplink-Synchronisationszeitbetrag umfassen, an das Benutzergerät, wobei die Konfigurationsinformationen zum Konfigurieren, für das Benutzergerät, des Pfades für Datenübertragung zu der Dienstzelle verwendet werden.

9. Basisstation nach Anspruch 5 oder 6, wobei die zweite Basisstation ferner Folgendes umfasst:
ein erstes Downlink-Synchronisationsmodul, das ausgelegt ist zum: nachdem das Referenzsignalempfangsmodul das durch das Benutzergerät gesendete Uplink-Referenzsignal empfangen hat, Senden an das Benutzergerät eines durch Mittel von Präcodierungsverarbeiten erhaltenen Downlink-Synchronisationssignals oder eines voreingestellten dedizierten Downlink-Synchronisationssignals, um Downlink-Synchronisation mit dem Benutzergerät abzuschließen.

10. Basisstation nach Anspruch 7 oder 8, wobei die zweite Basisstation ferner Folgendes umfasst:
ein zweites Downlink-Synchronisationsmodul, das ausgelegt ist zum: nachdem das Konfigurationsinformationenempfangsmodul die Konfigurationsinformationen erhalten hat und bevor das Konfigurationsinformationenaddier- und -sendemodul die Konfigurationsinformationen sendet, Senden an das Benutzergerät eines durch Mittel von Präcodierungsverarbeiten erhaltenen Downlink-Synchronisationssignals oder eines voreingestellten dedizierten Downlink-Synchronisationssignals, um Downlink-Synchronisation mit dem Benutzergerät abzuschließen.

11. Benutzergerät, Folgendes umfassend:
ein Erstzugangsmodul (1700), das ausgelegt ist zum Herstellen von Erstzugang zu einer ersten Basisstation;
**dadurch gekennzeichnet, dass** das Benutzergerät ferner Folgendes umfasst:
ein Zugangskanalressourcenempfangsmodul (1702), das ausgelegt ist zum Empfangen einer Kanalressource, die verwendet wird für eine Zugangsanforderung und die durch die erste Basisstation gesendet wurde, wobei die Kanalressource für eine Zugangsanforderung eine Kanalressource ist, die für eine Zugangsanforderung verwendet wird und die für das Benutzergerät reserviert wird durch Aushandeln, durch die erste Basisstation, mit einer einer Benutzerzelle entsprechenden Basisstation;
ein Zugangsanforderungssendemodul (1704), das ausgelegt ist zum ist Senden einer Zugangsanforderung an eine zweite Basisstation;
ein Datenpfadkonfigurations- und -empfangsmodul (1706), das ausgelegt ist zum Empfangen eines Pfades, der für Datenübertragung zu einer Dienstzelle ist und der ausgelegt ist durch die erste Basisstation für das Benutzergerät, wobei die Dienstzelle eine Benutzerzelle ist, die als eine Dienstzelle des Benutzergeräts durch Analysieren und Bestimmen, durch die erste Basisstation, von Kanalqualität der Benutzerzelle gemäß durch die zweite Basisstation gemeldeten Zugangsanforderungskanalqualitätsinformationen ausgewählt ist;
ein Uplink-Referenzsignalsendemodul (1708), das ausgelegt ist zum Senden eines Uplink-Referenzsignals an eine der Dienstzelle entsprechende Basisstation; und
ein Downlink-Datenempfangsmodul (17010), das ausgelegt ist zum Empfangen von Daten, die durch Gewichten durch Mittel des Präcodierens von Downlink-Daten erhalten wurden und die durch die der Dienstzelle entsprechende Basisstation gesendet werden;
wobei die erste Basisstation eine Basisstation in einer Makrozelle ist, die Benutzerzelle eine Mikrozelle in der Überdeckung der Makrozelle ist oder durch die Makrozelle gemäß Standortinformationen eines Benutzers ausgewählt ist und die zweite Basisstation eine Basisstation in der Mikrozelle ist.

12. Benutzergerät nach Anspruch 11, wobei das Erstzugangsmodul ferner ausgelegt ist zum Durchführen von Downlink-Synchronisation mit der ersten Basisstation und dann Durchführen von Uplink-Synchronisation, um einen Uplink-Timing-Vorlauf von dem Benutzergerät zu der ersten Basisstation zu erhalten; und
das Zugangsanforderungssendemodul insbesondere ausgelegt ist zum Senden der Zugangsanforderung an die zweite Basisstation gemäß dem Uplink-Timing-Vorlauf.

13. Benutzergerät nach Anspruch 11 oder 12, wobei das Benutzergerät ferner Folgendes umfasst:
ein erstes Downlink-Synchronisationssignalempfangsmodul (17012), das ausgelegt ist zum: nachdem das Uplink-Referenzsignalsendemodul das Uplink-Referenzsignal an die der Dienstzelle entsprechende Basisstation gesendet hat, Empfangen eines Downlink-Synchronisationssignals, das durch Mittel des Präcodierverarbeitens erhalten wurde und das durch die der Dienstzelle entsprechende Basisstation gesendet wurde, um Downlink-Synchronisation mit der zweiten Basisstation abzuschließen; oder Empfangen eines voreingestellten dedizierten Downlink-Synchronisationssignals, das durch die der Dienstzelle entsprechende Basisstation gesendet wurde, um Downlink-Synchronisation mit der zweiten Basisstation abzuschließen; und
das Downlink-Datenempfangsmodul insbesondere ausgelegt ist zum Empfangen, gemäß einer Downlink-Synchronisation mit der Dienstzelle, der Daten, die durch Gewichten der Downlink-Daten durch Mittel des Präcodierens erhalten wurden und die durch die der Dienstzelle entsprechende Basisstation gesendet wurden.

14. Benutzergerät nach Anspruch 11 oder 12, wobei das Benutzergerät ferner Folgendes umfasst:
ein zweites Downlink-Synchronisationssignalempfangsmodul (17014), das ausgelegt ist zum: bevor das Datenpfadkonfigurations- und -empfangsmodul durch die erste Basisstation gesendete Konfigurationsinformationen empfängt, Empfangen eines Downlink-Synchronisationssignals, das durch Mittel des Präcodierverarbeitens erhalten wurde und das durch die der Dienstzelle entsprechende Basisstation gesendet wurde, um Downlink-Synchronisation mit der zweiten Basisstation abzuschließen; oder Empfangen eines voreingestellten dedizierten Downlink-Synchronisationssignals, das durch die der Dienstzelle entsprechende Basisstation gesendet wurde, um Downlink-Synchronisation mit der zweiten Basisstation abzuschließen; wobei
die Konfigurationsinformationen durch die der Dienstzelle entsprechende Basisstation weitergeleitet werden und verwendet werden zum Konfigurieren, durch die erste Basisstation für das Benutzergerät, des Pfads für die Datenübertragung an die Dienstzelle; und
das Downlink-Datenempfangsmodul insbesondere ausgelegt ist zum Empfangen, gemäß einer Downlink-Synchronisation mit der Dienstzelle, der Daten, die durch Gewichten der Downlink-Daten durch Mittel des Präcodierens erhalten wurden und die durch die der Dienstzelle entsprechende Basisstation gesendet wurden.

15. Benutzergerät nach einem der Ansprüche 12 bis 14, wobei die durch das Datenpfadkonfigurations- und -empfangsmodul empfangenen Konfigurationsinformationen einen Uplink-Synchronisationszeitbetrag von dem Benutzergerät zu der der Dienstzelle entsprechenden Basisstation umfassen und das Uplink-Referenzsignalsendemodul insbesondere ausgelegt ist zum Senden, gemäß dem Uplink-Synchronisationszeitbetrag, des Uplink-Referenzsignals an die der Dienstzelle entsprechende Basisstation; oder
die Konfigurationsinformationen, die durch das Datenpfadkonfigurations- und -empfangsmodul empfangen wurden, eine Uplink-Zeitdifferenz von dem Benutzergerät zu der der Dienstzelle entsprechenden Basisstation umfassen und das Uplink-Referenzsignalsendemodul insbesondere ausgelegt ist zum: Subtrahieren der Uplink-Zeitdifferenz vom Uplink-Timing-Vorlauf, um einen Uplink-Synchronisationszeitbetrag von dem Benutzergerät zu der der Dienstzelle entsprechenden Basisstation zu erhalten, und zum Senden, gemäß dem Uplink-Synchronisationszeitbetrag, des Uplink-Referenzsignals an die der Dienstzelle entsprechende Basisstation.

16. Zellenzugangsverfahren, umfassend:
Herstellen (S300), durch eine erste Basisstation, eines Erstzugangs zu einem Benutzergerät;
**dadurch gekennzeichnet, dass** das Verfahren ferner die folgenden Schritte umfasst:
Aushandeln (S302), durch die erste Basisstation, mit einer zweiten, einer Benutzerzelle entsprechenden Basisstation zum Reservieren, für das Benutzergerät, einer für eine Zugangsanforderung verwendeten Kanalressource und Senden an das Benutzergerät der für eine Zugangsanforderung verwendeten Kanalressource;
Empfangen (S312), durch die erste Basisstation, von durch die zweite Basisstation gemeldeten, der Benutzerzelle entsprechenden Zugangsanforderungskanalqualitätsinformationen, wobei die Zugangsanforderungskanalqualitätsinformationen Zugangsanforderungskanalqualitätsinformationen sind, die erhalten werden durch Durchführen, durch die der Benutzerzelle entsprechenden zweiten Basisstation, von Kanalqualitätsanalyse und -messung gemäß einer durch das Benutzergerät gesendeten empfangenen Zugangsanforderung;
Analysieren und Bestimmen (S314), durch die erste Basisstation, von Kanalqualität der Benutzerzelle gemäß den Zugangsanforderungskanalqualitätsinformationen, um eine Benutzerzelle als eine Dienstzelle des Benutzergeräts auszuwählen; und
Konfigurieren (S316), durch die erste Basisstation für das Benutzergerät, eines Pfads für Datenübertragung an die Dienstzelle;
wobei die erste Basisstation eine Basisstation in einer Makrozelle ist, die Benutzerzelle eine Mikrozelle in der Überdeckung der Makrozelle ist oder durch die Makrozelle gemäß Standortinformationen eines Benutzers ausgewählt ist und die zweite Basisstation eine Basisstation in der Mikrozelle ist.

17. Zellenzugangsverfahren, **dadurch gekennzeichnet, dass** das Verfahren die folgenden Schritte umfasst:
Aushandeln (S302), durch eine zweite Basisstation, mit einer ersten Basisstation zum Reservieren, für ein Benutzergerät, einer für eine Zugangsanforderung verwendeten Kanalressource;
Empfangen (S306), durch die zweite Basisstation, einer durch das Benutzergerät gesendeten Zugangsanforderung;
Durchführen (S308), durch die zweite Basisstation, von Kanalqualitätsanalyse und -messung gemäß der Zugangsanforderung, um Zugangsanforderungskanalqualitätsinformationen zu erhalten und Senden der Zugangsanforderungskanalqualitätsinformationen an die erste Basisstation;
Empfangen (S318), durch die zweite Basisstation, eines durch das Benutzergerät gesendeten Uplink-Referenzsignals; und
Gewichten (S320), durch die zweite Basisstation, von Downlink-Daten durch Mittel des Präcodierens und dann Senden der gewichteten Downlink-Daten an das Benutzergerät;
wobei die erste Basisstation eine Basisstation in einer Makrozelle ist, die zweite Basisstation eine Basisstation in einer Mikrozelle ist und die Mikrozelle in der Überdeckung der Makrozelle ist oder durch die Makrozelle gemäß Standortinformationen eines Benutzers ausgewählt ist.

18. Zellenzugangsverfahren, umfassend:
Herstellen (S300), durch ein Benutzergerät, von Erstzugang zu einer ersten Basisstation;
**dadurch gekennzeichnet, dass** das Verfahren ferner die folgenden Schritte umfasst: Empfangen (S304), durch das Benutzergerät, einer Kanalressource, die verwendet wird für eine Zugangsanforderung und die durch die erste Basisstation gesendet wurde, wobei die Kanalressource für eine Zugangsanforderung eine Kanalressource ist, die für eine Zugangsanforderung verwendet wird und die für das Benutzergerät reserviert wird durch Aushandeln, durch die erste Basisstation, mit einer einer Benutzerzelle entsprechenden Basisstation;
Senden (S306), durch das Benutzergerät, einer Zugangsanforderung an eine zweite Basisstation;
Empfangen (S316), durch das Benutzergerät, eines Pfades, der für Datenübertragung zu einer Dienstzelle ist und der ausgelegt ist durch die erste Basisstation für das Benutzergerät, wobei die Dienstzelle eine Benutzerzelle ist, die als eine Dienstzelle des Benutzergeräts durch Analysieren und Bestimmen, durch die erste Basisstation, von Kanalqualität der Benutzerzelle gemäß durch die zweite Basisstation gemeldeten Zugangsanforderungskanalqualitätsinformationen ausgewählt ist;
Senden (S318), durch das Benutzergerät, eines Uplink-Referenzsignals an eine der Dienstzelle entsprechende Basisstation; und
Empfangen (S320), durch das Benutzergerät, von Daten, die durch Gewichten durch Mittel des Präcodierens von Downlink-Daten erhalten wurden und die durch die der Dienstzelle entsprechenden Basisstation gesendet werden;
wobei die erste Basisstation eine Basisstation in einer Makrozelle ist, die Benutzerzelle eine Mikrozelle in der Überdeckung der Makrozelle ist oder durch die Makrozelle gemäß Standortinformationen eines Benutzers ausgewählt ist und die zweite Basisstation eine Basisstation in der Mikrozelle ist.

## Revendications

1. Station de base, comprenant :
un module d'établissement d'accès initial (1100), adapté à établir un accès initial à un équipement utilisateur ;
la station de base étant **caractérisée en ce qu'**elle comprend en outre :
un module de négociation de ressource de canal (1102), adapté à : négocier, avec une deuxième station de base correspondant à une cellule utilisateur, la réservation, pour l'équipement utilisateur, d'une ressource de canal utilisée pour une requête d'accès, et envoyer à l'équipement utilisateur la ressource de canal utilisée pour une requête d'accès ;
un module de réception de qualité de canal (1104), adapté à recevoir des informations de qualité de canal de requête d'accès notifiées par la deuxième station de base correspondant à la cellule utilisateur, les informations de qualité de canal de requête d'accès constituant des informations de qualité de canal de requête d'accès obtenues par exécution, par la deuxième station de base correspondant à la cellule utilisateur, d'une analyse et d'une mesure de qualité de canal selon une requête d'accès reçue envoyée par l'équipement utilisateur ;
un module de détermination de cellule de desserte (1106), adapté à analyser et déterminer une qualité de canal de la cellule utilisateur selon les informations de qualité de canal de requête d'accès, dans le but de sélectionner une cellule utilisateur comme cellule de desserte de l'équipement utilisateur ; et
un module de configuration de chemin de données (1108), adapté à configurer, pour l'équipement utilisateur, un chemin de transmission de données vers la cellule de desserte ;
la première station de base étant une station de base dans une macrocellule, la cellule utilisateur étant une microcellule située dans la couverture de la macrocellule ou étant sélectionnée par la macrocellule selon des informations de localisation relatives à un utilisateur et la deuxième station de base étant une station de base dans la microcellule.

2. Station de base selon la revendication 1, la station de base étant une première station de base, et la station de base correspondant à la cellule utilisateur étant une deuxième station de base ; et
le module d'établissement d'accès initial étant adapté en outre à : exécuter une synchronisation sens descendant avec l'équipement utilisateur puis exécuter une synchronisation sens montant dans le but d'obtenir une avance temporelle sens montant depuis l'équipement utilisateur jusqu'à la première station de base, et envoyer l'avance temporelle sens montant à l'équipement utilisateur.

3. Station de base selon la revendication 2, dans laquelle le module de configuration de chemin de données est plus particulièrement adapté à envoyer des informations de configuration comprenant l'avance temporelle sens montant à la deuxième station de base, les informations de configuration servant à configurer, pour l'équipement utilisateur, le chemin de transmission de données à la cellule de desserte.

4. Station de base selon la revendication 2, dans laquelle les informations de qualité de canal de requête d'accès comprennent une différence de temps sens montant depuis l'équipement utilisateur jusqu'à la deuxième station de base, et la différence de temps sens montant est une différence de temps obtenue par exécution, par la deuxième station de base, d'une opération de soustraction sur un temps d'arrivée prévu auquel la requête d'accès envoyée par l'équipement utilisateur doit être reçue et un temps d'arrivée effectif auquel la requête d'accès envoyée par l'équipement utilisateur est reçue ; et
le module de configuration de chemin de données comprend :
une unité de synchronisation sens montant (11080), adaptée à soustraire la différence de temps sens montant à l'avance temporelle sens montant, dans le but d'obtenir une quantité de temps de synchronisation sens montant depuis l'équipement utilisateur jusqu'à une station de base correspondant à la cellule de desserte ; et
une unité d'envoi de configuration (11082), adaptée à envoyer des informations de configuration comprenant la quantité de temps de synchronisation sens montant à l'équipement utilisateur, les informations de configuration servant à configurer, pour l'équipement utilisateur, le chemin de transmission de données vers la cellule de desserte.

5. Station de base, la station de base étant une deuxième station de base, **caractérisée en ce que** la deuxième station de base comprend :
un module de négociation et de réservation de ressource (1300), adapté à négocier, avec une première station de base, la réservation, pour un équipement utilisateur, d'une ressource de canal utilisée pour une requête d'accès ;
un module de réception de requête d'accès (1302), adapté à recevoir une requête d'accès envoyée par l'équipement utilisateur ;
un module d'analyse et d'envoi de qualité de canal (1304), adapté à : exécuter une analyse et une mesure de qualité de canal selon la requête d'accès dans le but d'obtenir des informations de qualité de canal de requête d'accès, et envoyer les informations de qualité de canal de requête d'accès à la première station de base ;
un module de réception de signal de référence (1306), adapté à recevoir un signal de référence sens montant envoyé par l'équipement utilisateur ; et
un module d'envoi de données sens descendant (1308), adapté à : pondérer des données sens descendant au moyen d'un précodage, puis envoyer les données sens descendant pondérées à l'équipement utilisateur ;
la première station de base étant une station de base dans une macrocellule, la deuxième station de base étant une station de base dans une microcellule et la microcellule étant située dans la couverture de la macrocellule ou étant sélectionnée par la macrocellule selon des informations de localisation relatives à un utilisateur.

6. Station de base selon la revendication 5, dans laquelle le module d'analyse et d'envoi de qualité de canal comprend :
une unité de calcul de différence de temps (13040), adaptée à exécuter une opération de soustraction sur un temps d'arrivée prévu auquel la requête d'accès envoyée par l'équipement utilisateur doit être reçue et un temps d'arrivée effectif auquel la requête d'accès envoyée par l'équipement utilisateur est reçue, dans le but d'obtenir une différence de temps sens montant depuis l'équipement utilisateur jusqu'à la deuxième station de base ;
une unité de génération d'informations de qualité de canal (13042), adaptée à exécuter une analyse et une mesure de qualité de canal selon la requête d'accès dans le but d'obtenir les informations de qualité de canal de requête d'accès ; et
une unité d'envoi d'informations de qualité de canal (13044), adaptée à : ajouter la différence de temps sens montant aux informations de qualité d'informations de requête d'accès, puis envoyer les informations de qualité de canal de requête d'accès à la première station de base.

7. Station de base selon la revendication 5, la deuxième station de base comprenant en outre :
un premier module de génération de différence de temps (13010), adapté à exécuter une opération de soustraction sur un temps d'arrivée prévu auquel la requête d'accès envoyée par l'équipement utilisateur doit être reçue et un temps d'arrivée effectif auquel la requête d'accès envoyée par l'équipement utilisateur est reçue, dans le but d'obtenir une différence de temps sens montant depuis l'équipement utilisateur jusqu'à la deuxième station de base ;
un premier module de réception d'informations de configuration (13012), adapté à recevoir des informations de configuration comprenant une avance temporelle sens montant et envoyées par la première station de base, les informations de configuration servant à configurer, pour l'équipement utilisateur, un chemin de transmission de données vers une cellule de desserte, et l'avance temporelle sens montant étant une avance temporelle sens montant depuis l'équipement utilisateur jusqu'à la première station de base et obtenue par exécution, par la première station de base, d'une synchronisation sens descendant avec l'équipement utilisateur puis par exécution d'une synchronisation sens montant ; et
un module d'ajout et d'envoi d'informations de configuration (13014), adapté à : ajouter, aux informations de configuration, la différence de temps sens montant depuis l'équipement utilisateur jusqu'à la deuxième station de base, et envoyer les informations de configuration à l'équipement utilisateur.

8. Station de base selon la revendication 5, la deuxième station de base comprenant en outre :
un deuxième module de génération de différence de temps (13016), adapté à exécuter une opération de soustraction sur un temps d'arrivée prévu auquel la requête d'accès envoyée par l'équipement utilisateur doit être reçue et un temps d'arrivée effectif auquel la requête d'accès envoyée par l'équipement utilisateur est reçue, dans le but d'obtenir une différence de temps sens montant depuis l'équipement utilisateur jusqu'à la deuxième station de base ;
un deuxième module de réception d'informations de configuration (13018), adapté à recevoir des informations de configuration comprenant une avance temporelle sens montant et envoyées par la première station de base, les informations de configuration servant à configurer, pour l'équipement utilisateur, un chemin de transmission de données vers la cellule de desserte, et l'avance temporelle sens montant étant une avance temporelle sens montant depuis l'équipement utilisateur jusqu'à la première station de base et obtenue par exécution, par la première station de base, d'une synchronisation sens descendant avec l'équipement utilisateur puis par exécution d'une synchronisation sens montant ;
un module de calcul de synchronisation sens montant (13020), adapté à soustraire la différence de temps sens montant à l'avance temporelle sens montant, dans le but d'obtenir une quantité de temps de synchronisation sens montant depuis l'équipement utilisateur jusqu'à une station de base correspondant à la cellule de desserte ; et
un module d'ajout et d'envoi (13022), adapté à envoyer des informations de configuration comprenant la quantité de temps de synchronisation sens montant à l'équipement utilisateur, les informations de configuration servant à configurer, pour l'équipement utilisateur, le chemin de transmission de données vers la cellule de desserte.

9. Station de base selon la revendication 5 ou 6, la deuxième station de base comprenant en outre :
un premier module de synchronisation sens descendant, adapté à : après que le module de réception de signal de référence a reçu le signal de référence sens montant envoyé par l'équipement utilisateur, envoyer à l'équipement utilisateur un signal de synchronisation sens descendant obtenu au moyen d'un traitement de précodage ou un signal de synchronisation sens descendant dédié prédéfini, dans le but d'achever une synchronisation sens descendant avec l'équipement utilisateur.

10. Station de base selon la revendication 7 ou 8, la deuxième station de base comprenant en outre :
un deuxième module de synchronisation sens descendant, adapté à : après que le module de réception d'informations de configuration a reçu les informations de configuration, et avant que le module d'ajout et d'envoi d'informations de configuration n'envoie les informations de configuration, envoyer à l'équipement utilisateur un signal de synchronisation sens descendant obtenu au moyen d'un traitement de précodage ou un signal de synchronisation sens descendant dédié prédéfini, dans le but d'achever une synchronisation sens descendant avec l'équipement utilisateur.

11. Équipement utilisateur, comprenant :
un module d'accès initial (1700), adapté à établir un accès initial à une première station de base ;
l'équipement utilisateur étant **caractérisé en ce qu'**il comprend en outre :
un module de réception de ressource de canal d'accès (1702), adapté à recevoir une ressource de canal utilisée pour une requête d'accès et envoyée par la première station de base, la ressource de canal pour une requête d'accès constituant une ressource de canal utilisée pour une requête d'accès et réservée pour l'équipement utilisateur par négociation, par la première station de base, avec une station de base correspondant à une cellule utilisateur ;
un module d'envoi de requête d'accès (1704), adapté à envoyer une requête d'accès à une deuxième station de base ;
un module de configuration et de réception de chemin de données (1706), adapté à recevoir un chemin de transmission de données vers une cellule de desserte et qui est configuré par la première station de base, pour l'équipement utilisateur, la cellule de desserte étant une cellule utilisateur sélectionnée comme cellule de desserte de l'équipement utilisateur par analyse et détermination, par la première station de base, d'une qualité de canal de la cellule utilisateur selon des informations de qualité de canal de requête d'accès notifiées par la deuxième station de base ;
un module d'envoi de signal de référence sens montant (1708), adapté à envoyer un signal de référence sens montant à une station de base correspondant à la cellule de desserte ; et
un module de réception de données sens descendant (17010), adapté à recevoir des données obtenues par pondération de données sens descendant au moyen d'un précodage et envoyées par la station de base correspondant à la cellule de desserte ;
la première station de base étant une station de base dans une macrocellule, la cellule utilisateur étant une microcellule située dans la couverture de la macrocellule ou étant sélectionnée par la macrocellule selon des informations de localisation relatives à un utilisateur et la deuxième station de base étant une station de base dans la microcellule.

12. Équipement utilisateur selon la revendication 11, dans lequel le module d'accès initial est adapté en outre à exécuter une synchronisation sens descendant avec la première station de base puis à exécuter une synchronisation sens montant dans le but d'obtenir une avancée temporelle sens montant depuis l'équipement utilisateur jusqu'à la première station de base ; et
le module d'envoi de requête d'accès est plus particulièrement adapté à envoyer la requête d'accès à la deuxième station de base selon l'avance temporelle sens montant.

13. Équipement utilisateur selon la revendication 11 ou 12, l'équipement utilisateur comprenant en outre :
un premier module de réception de signal de synchronisation sens descendant (17012), adapté à : après que le module d'envoi de signal de référence sens montant a envoyé le signal de référence sens montant à la station de base correspondant à la cellule de desserte, recevoir un signal de synchronisation sens descendant obtenu au moyen d'un traitement de précodage et envoyé par la station de base correspondant à la cellule de desserte, dans le but d'achever une synchronisation sens descendant avec la deuxième station de base ; ou recevoir un signal de synchronisation sens descendant dédié prédéfini envoyé par la station de base correspondant à la cellule de desserte, dans le but d'achever une synchronisation sens descendant avec la deuxième station de base ; et
le module de réception de données sens descendant étant plus particulièrement adapté à recevoir, selon une synchronisation sens descendant avec la cellule de desserte, les données obtenues par pondération des données sens descendant au moyen d'un précodage et envoyées par la station de base correspondant à la cellule de desserte.

14. Équipement utilisateur selon la revendication 11 ou 12, l'équipement utilisateur comprenant en outre :
un deuxième module de réception de signal de synchronisation sens descendant (17014), adapté à : avant que le module de configuration et de réception de chemin de données ne reçoive des informations de configuration envoyées par la première station de base, recevoir un signal de synchronisation sens descendant obtenu au moyen d'un traitement de précodage et envoyé par la station de base correspondant à la cellule de desserte, dans le but d'achever une synchronisation sens descendant avec la deuxième station de base ; ou recevoir un signal de synchronisation sens descendant dédié prédéfini envoyé par la station de base correspondant à la cellule de desserte, dans le but d'achever une synchronisation sens descendant avec la deuxième station de base,
les informations de configuration étant retransmises par la station de base correspondant à la cellule de desserte et utilisées pour la configuration, par la première station de base, pour l'équipement utilisateur, du chemin de transmission de données vers la cellule de desserte ; et
le module de réception de données sens descendant étant plus particulièrement adapté à recevoir, selon une synchronisation sens descendant avec la cellule de desserte, les données obtenues par pondération des données sens descendant au moyen d'un précodage et envoyées par la station de base correspondant à la cellule de desserte.

15. Équipement utilisateur selon l'une quelconque des revendications 12 à 14, dans lequel les informations de configuration reçues par le module de configuration et de réception de chemin de données comprend une quantité de temps de synchronisation sens montant depuis l'équipement utilisateur jusqu'à la station de base correspondant à la cellule de desserte, et le module d'envoi de signal de référence sens montant est plus particulièrement adapté à envoyer, selon la quantité de temps de synchronisation sens montant, le signal de référence sens montant à la station de base correspondant à la cellule de desserte ; ou
les informations de configuration reçues par le module de configuration et de réception de chemin de données comprennent une différence de temps sens montant depuis l'équipement utilisateur jusqu'à la station de base correspondant à la cellule de desserte, et le module d'envoi de signal de référence sens montant est plus particulièrement adapté à : soustraire la différence de temps sens montant à l'avance temporelle sens montant, dans le but d'obtenir une quantité de temps de synchronisation sens montant depuis l'équipement utilisateur jusqu'à la station de base correspondant à la cellule de desserte, et envoyer, selon la quantité de temps de synchronisation sens montant, le signal de référence sens montant à la station de base correspondant à la cellule de desserte.

16. Procédé d'accès à une cellule, le procédé comprenant l'étape suivante :
établissement (S300), par une première station de base, d'un accès initial à un équipement utilisateur ;
le procédé étant **caractérisé en ce qu'**il comprend en outre les étapes suivantes :
négociation (S302), par la première station de base, avec une deuxième station de base correspondant à une cellule utilisateur, de la réservation, pour l'équipement utilisateur, d'une ressource de canal utilisée pour une requête d'accès, et envoi à l'équipement utilisateur de la ressource de canal utilisée pour une requête d'accès ;
réception (S312), par la première station de base, d'informations de qualité de canal de requête d'accès notifiées par la deuxième station de base correspondant à la cellule utilisateur, les informations de qualité de canal de requête d'accès constituant des informations de qualité de canal de requête d'accès obtenues par exécution, par la deuxième station de base correspondant à la cellule utilisateur, d'une analyse et d'une mesure de qualité de canal selon une requête d'accès reçue envoyée par l'équipement utilisateur ;
analyse et détermination (S314), par la première station de base, d'une qualité de canal de la cellule utilisateur selon les informations de qualité de canal de requête d'accès, dans le but de sélectionner une cellule utilisateur comme cellule de desserte de l'équipement utilisateur ; et
configuration (S316), par la première station de base, pour l'équipement utilisateur, d'un chemin de transmission de données vers la cellule de desserte ;
la première station de base étant une station de base dans une macrocellule, la cellule utilisateur étant une microcellule située dans la couverture de la macrocellule ou étant sélectionnée par la macrocellule selon des informations de localisation relatives à un utilisateur et la deuxième station de base étant une station de base dans la microcellule.

17. Procédé d'accès à une cellule, le procédé étant **caractérisé en ce qu'**il comprend les étapes suivantes :
négociation (S302), par une deuxième station de base, avec une première station de base, de la réservation, pour un équipement utilisateur, d'une ressource de canal utilisée pour une requête d'accès ;
réception (S306), par la deuxième station de base, d'une requête d'accès envoyée par l'équipement utilisateur ;
exécution (S308), par la deuxième station de base, d'une analyse et d'une mesure de qualité de canal selon la requête d'accès dans le but d'obtenir des informations de qualité de canal de requête d'accès, et envoi des informations de qualité de canal de requête d'accès à la première station de base ;
réception (S318), par la deuxième station de base, d'un signal de référence sens montant envoyé par l'équipement utilisateur ; et
pondération (S320), par la deuxième station de base, de données sens descendant au moyen d'un précodage, puis envoi des données sens descendant pondérées à l'équipement utilisateur ;
la première station de base étant une station de base dans une macrocellule, la deuxième station de base étant une station de base dans une microcellule et la microcellule étant située dans la couverture de la macrocellule ou étant sélectionnée par la macrocellule selon des informations de localisation relatives à un utilisateur.

18. Procédé d'accès à une cellule, le procédé comprenant l'étape suivante :
établissement (S300), par un équipement utilisateur, d'un accès initial à une première station de base ;
le procédé étant **caractérisé en ce qu'**il comprend en outre les étapes suivantes :
réception (S304), par l'équipement utilisateur, d'une ressource de canal utilisée pour une requête d'accès et envoyée par la première station de base, la ressource de canal pour une requête d'accès constituant une ressource de canal utilisée pour une requête d'accès et réservée pour l'équipement utilisateur par négociation, par la première station de base, avec une station de base correspondant à une cellule utilisateur ;
envoi (S306), par l'équipement utilisateur, d'une requête d'accès à une deuxième station de base ;
réception (S316), par l'équipement utilisateur, d'un chemin de transmission de données vers une cellule de desserte et configuré par la première station de base, pour l'équipement utilisateur, la cellule de desserte étant une cellule utilisateur sélectionnée comme cellule de desserte de l'équipement utilisateur par analyse et détermination, par la première station de base, d'une qualité de canal de la cellule utilisateur selon des informations de qualité de canal de requête d'accès notifiées par la deuxième station de base ;
envoi (S318), par l'équipement utilisateur, d'un signal de référence sens montant à une station de base correspondant à la cellule de desserte ; et
réception (S320), par l'équipement utilisateur, de données obtenues par pondération de données sens descendant au moyen d'un précodage et envoyées par la station de base correspondant à la cellule de desserte ;
la première station de base étant une station de base dans une macrocellule, la cellule utilisateur étant une microcellule située dans la couverture de la macrocellule ou étant sélectionnée par la macrocellule selon des informations de localisation relatives à un utilisateur et la deuxième station de base étant une station de base dans la microcellule.
